# EUROPÄISCHE PATENTSCHRIFT

(11) **EP 3 284 577 B1**
(45) Veröffentlichungstag und Bekanntmachung des Hinweises auf die Patenterteilung: **24.01.2024**
(21) Anmeldenummer: 17190108.5
(22) Anmeldetag: 10.03.2015
(51) Int. Cl.: B29C 49/06, B29C 33/30, B25J 9/00, B25J 5/02, B29D 22/00, B29C 49/42, B29C 49/48, B29C 49/28, B29C 31/00

(54) **VORRICHTUNG UND VERFAHREN ZUM UMFORMEN VON KUNSTSTOFFVORFORMLINGEN ZU KUNSTSTOFFBEHÄLTNISSEN MIT WECHSELEINRICHTUNG FÜR WERKZEUGE**
DEVICE AND METHOD FOR FORMING PLASTIC PRE-FORMS INTO PLASTIC CONTAINERS WITH CHANGING DEVICE FOR TOOLS
DISPOSITIF ET PROCÉDÉ DESTINÉS AU MOULAGE D'ÉBAUCHES EN PLASTIQUE EN RÉCIPIENTS EN PLASTIQUE À L'AIDE DE DISPOSITIF DE CHANGEMENT D'OUTILLAGE

(30) Priorität: 10.03.2014 DE 102014103159
(43) Veröffentlichungstag der Anmeldung: 21.02.2018
(62) Teilanmeldung aus: 15158527.0
(73) Patentinhaber: Krones AG, 93073 Neutraubling (DE)
(72) Erfinder: Voth, Klaus, 93073 Neutraubling (DE); Schönberger, Wolfgang, 93073 Neutraubling (DE)
(74) Vertreter: Hannke Bittner & Partner mbB Regensburg

(56) Entgegenhaltungen:
- EP-A1- 2 878 423
- EP-A2- 2 292 402
- WO-A1-2011/026963
- WO-A1-2012/120031
- FR-A1- 2 921 294
- FR-A1- 2 990 639

## Beschreibung

Die vorliegende Erfindung bezieht sich auf eine Vorrichtung gemäß den Oberbegriff des Anspruchs 1 und ein Verfahren zum Umformen von Kunststoffvorformlingen zu Kunststoffbehältnissen. gemäß den Oberbegriff des Anspruchs 13. Derartige Vorrichtungen und Verfahren sind aus dem Stand der Technik seit langem bekannt. Dabei werden üblicherweise sogenannte Kunststoffvorformlinge erwärmt und nach ihrer Erwärmung in einem erwärmten Zustand zu den Kunststoffbehältnissen expandiert. Dieses Expandieren erfolgt dabei üblicherweise durch Beaufschlagung mit Druckluft. Die Umformungseinrichtung weist dabei üblicherweise eine Vielzahl von Blasstationen auf, wobei die einzelnen Blasstationen wiederum Blasformen aufweisen, innerhalb derer die Kunststoffvorformlinge zu den Kunststoffbehältnissen umformbar sind. Falls nun von der Herstellung einer bestimmten Behältnissorte auf eine andere Behältnissorte umgestellt werden soll, müssen hierzu auch unter anderem die einzelnen Blasformen ausgewechselt werden.

In Abhängigkeit von bestimmten Umformungsprozessen ist es auch erforderlich, gewisse Garniturenteile für die Erwärmungseinrichtung, wie beispielsweise Haltedorne, welche die Kunststoffvorformlinge halten und Abschirmplatten oder dergleichen auszuwechseln. Dieser Wechselvorgang ist dabei sehr aufwendig.

Aus dem internen Stand der Technik der Anmelderin ist es daher bekannt, zum Auswechseln dieser Garniturenteile Wechselroboter zu verwenden. Diese Wechselroboter können dabei Blasformen von ihren Blasformträgern entnehmen und durch andere Blasformen ersetzen. Auch sind aus dem internen Stand der Technik der Anmelderin Konzepte bekannt, bei denen mehrere derartige Wechselroboter eingesetzt werden, um beispielsweise auch hinsichtlich der Erwärmungseinrichtung bzw. des Ofens die Garniturenteile auszuwechseln. Diese Vorgehensweise ist jedoch relativ kostenintensiv.

Die Druckschrift FR 2 990 639 offenbart eine Anlage gemäß den Oberbegriff des Anspruchs 1 und ein Verfahren gemäß den Oberbegriff des Anspruchs 13.

Der vorliegenden Erfindung liegt daher die Aufgabe zugrunde, eine Vorrichtung und ein Verfahren zur Verfügung zu stellen, welche im Vergleich zu aus dem Stand der Technik bekannten Vorrichtungen effizienter und insbesondere auch kostengünstiger einsetzbar ist. Diese Aufgabe wird erfindungsgemäß durch den Gegenstand der unabhängigen Patentansprüche gelöst. Vorteilhafte Ausführungsformen und Weiterbildungen sind Gegenstand der Unteransprüche.

Eine erfindungsgemäße Anlage zum Umformen von Kunststoffvorformlingen zu Kunststoffbehältnissen weist eine Erwärmungseinrichtung zum Erwärmen der Kunststoffvorformlinge auf, wobei diese Erwärmungseinrichtung eine Transporteinrichtung zum Transportieren der Kunststoffvorformlinge mit einer Vielzahl von Halteelementen zum Halten der Kunststoffvorformlinge aufweist.

Weiterhin weist die Anlage eine Vorrichtung zum Umformen der Kunststoffvorformlinge zu den Kunststoffbehältnissen auf, welche in einer Transportrichtung der Kunststoffvorformlinge nach der Erwärmungseinrichtung angeordnet ist, wobei die Vorrichtung eine Transporteinrichtung aufweist, welche die Kunststoffvorformlinge entlang eines vorgegebenen Transportpfades transportiert und wobei die Transporteinrichtung einen beweglichen und zumindest mittelbar an einem Basisträger angeordneten Stationsträger aufweist, an dem eine Vielzahl von Umformungsstationen angeordnet ist, wobei diese Umformungsstationen jeweils Blasformeinrichtungen aufweisen, welche wiederum jeweils Hohlräume ausbilden, innerhalb derer die Kunststoffvorformlinge zu den Kunststoffbehältnissen umformbar bzw. expandierbar sind. Dabei sind diese Blasformeinrichtungen jeweils an Blasformträgern angeordnet. Erfindungsgemäß weist die Vorrichtung eine Wechseleinrichtung auf, welche geeignet und dazu bestimmt ist, zumindest die Blasformeinrichtungen von deren Blasformträgern zu entfernen und/oder Blasformeinrichtungen an den Blasformträgern anzuordnen. Dabei weist diese Wechseleinrichtung wenigstens einen schwenkbaren Wechselarm auf, wobei diese Wechseleinrichtung weiterhin geeignet und dazu bestimmt ist, wenigstens ein wechselbares Element der Erwärmungseinrichtung von der Erwärmungseinrichtung zu entfernen und/oder das wechselbare Element an dieser Erwärmungseinrichtung anzuordnen.

Es wird daher im Gegensatz zu aus dem Stand der Technik bekannten Anlagen vorgeschlagen, dass die Wechseleinrichtung nicht nur zum Auswechseln der Blasformen dient, sondern die gleiche Wechseleinrichtung auch zum Entfernen bzw. Wechsein von Elementen der Erwärmungseinrichtung dient.

Mit anderen Worten kann ein Roboter, auch für den Wechsel von Elementen der Erwärmungseinrichtung, wie beispielsweise von Haltedornen bzw. Heizdornen oder Abschirmplatten in dem Heizmodul genutzt werden. Auf diese Weise kann die vorhandene Wechseleinrichtung weiter genutzt und auch besser ausgelastet werden. Weiterhin kann auch das Bedienpersonal effizienter eingesetzt werden, da nur eine Wechseleinrichtung den Wechsel aller Garnituren bevorzugt komplett übernimmt.

Bevorzugt weist die Erwärmungseinrichtung eine Verriegelungseinrichtung bzw. Verriegelungselemente auf, welche die einwechselbaren Wechselelemente gegenüber der Erwärmungsvorrichtung bzw. gegen einen Träger verriegeln. Vorteilhaft ist dabei diese Verriegelungseinrichtung derart ausgeführt, dass sie von der Wechseleinrichtung selbsttätig gelöst und gegebenenfalls auch - insbesondere selbsttätig bzw. selbstständig - arretiert werden kann. Auf diese Weise ist es möglich, dass die Wechseleinrichtung zunächst eine derartige Verriegelung freigibt und anschließend das auszuwechselnde Element eingewechselt werden kann, um bevorzugt anschließend die Verriegelung wieder zu arretieren.

Mit anderen Worten kann die Erwärmungseinrichtung Entriegelungs- bzw. Verriegelungsmechanismen aufweisen, welche einen Wechsel des jeweiligen Garniturenteils bzw. auszuwechselnden Elementes ermöglichen bzw. verhindern.

Bei einer weiteren vorteilhaften Ausführungsform ist der Wechselarm sowohl in eine erste Wechselposition bewegbar, in welcher er Blasformeinrichtungen greifen kann als auch in eine zweite Wechselposition, in welcher er das wenigstens eine wechselbare Element der Erwärmungseinrichtung greifen kann. Damit wird vorgeschlagen, dass die Wechseleinrichtung einen Wechselarm aufweist, der sowohl in einen Arbeitsbereich der Vorrichtung zum Umformen der Kunststoffvorformlinge führbar ist und in diesem Bereich Wechselvorgänge durchführen kann, als auch einen Arbeitsbereich der Erwärmungsvorrichtung, um dort die entsprechenden Wechselelemente bzw. Garniturenteile auszutauschen.

Bei einer weiteren vorteilhaften Ausführungsform weist die Wechseleinrichtung wenigstens eine Greifeinrichtung zum Greifen der Blasformeinrichtungen auf. Unter einer Greifeinrichtung wird dabei jegliche Einrichtung verstanden, welche in zumindest kraftschlüssigen Kontakt mit der Blasformeinrichtung gelangen kann, um diese so von einer Blasstation bzw. von einem Blasformträger zu entfernen bzw. um diese an einer Blasstation anzuordnen. Dabei könnte es sich um eine Greifeinrichtung im engeren Sinne handeln, es wäre jedoch auch möglich, dass die Greifeinrichtung Eingriffselemente aufweist, welche mit entsprechend angepassten Eingriffselementen der Blasform zusammenwirkt, so dass ein wenigstens kraftschlüssiger, bevorzugt jedoch auch ein formschlüssiger Eingriff zwischen der Blasformeinrichtung und der Greifeinrichtung entsteht.

Bei einer weiteren vorteilhaften Ausführungsform ist die Greifeinrichtung wechselbar an dem Wechselarm angeordnet. So ist es beispielsweise möglich, dass eine Greifeinrichtung, welche zum Greifen einer Blasformeinrichtung dient, eingetauscht werden kann gegen eine Greifeinrichtung, welche zum Greifen eines Wechselelementes der Erwärmungseinrichtung dient. Dabei ist es besonders bevorzugt möglich, dass die Wechseleinrichtung die jeweiligen Greifeinrichtungen selbsttätig auswechseln kann. Auf diese Weise ist ein weitgehend automatischer Wechselbetrieb sowohl im Hinblick auf die Vorrichtung zum Umformen der Kunststoffvorformlinge als auch im Hinblick auf die Erwärmungseinrichtung möglich.

Allgemein handelt es sich bei der Greifeinrichtung um eine Behandlungseinrichtung bzw. Handlingeinrichtung, welche jedoch insbesondere auch zum Transport des jeweils einzuwechselnden Bauteils wie beispielsweise der Blasform oder auch eines Haltedorns oder einer Abschirmplatte geeignet ist. Bei einer weiteren vorteilhaften Ausführungsform wäre es auch denkbar, dass an einem Arm der Wechseleinrichtung zwei Greifeinrichtungen angeordnet sind, wobei eines dieser Greifelemente zum Greifen der Blasformeinrichtung und ein anderes zum Greifen eines Wechselelementes der Erwärmungseinrichtung dient.

Dabei wäre es beispielsweise möglich, dass diese beiden Greifeinrichtungen hinsichtlich einer Schwenk- oder Drehachse auf gegenüberliegenden Seiten angeordnet sind. Auf diese Weise ist es möglich, dass die jeweils andere Greifeinrichtung den momentan durchzuführenden Wechselvorgang nicht behindert.

Bei einer weiteren vorteilhaften Ausführungsform ist die Wechseleinrichtung in ihrer Gesamtheit gegenüber der Erwärmungseinrichtung und der Vorrichtung zum Umformen bewegbar. So wäre es denkbar, dass die Wechseleinrichtung auf Schienen geführt ist und so zwischen vorbestimmten Bereichen der Erwärmungseinrichtung und der Umformungseinrichtung bewegbar ist.

Anders wäre es jedoch auch möglich, dass die Wechseleinrichtung beispielsweise zwischen der Erwärmungseinrichtung und der Vorrichtung zum Umformen fest platziert ist und bevorzugt mit ihrem Arm beide Maschinenmodule bedienen kann. Bei dieser Ausgestaltung ist der besagte Arm bevorzugt mit einem Wechselkopf, d.h. insbesondere der Greifeinrichtung ausgestattet, der es ihm ermöglicht, die jeweilige Greifeinrichtung selbstständig zu wechseln und abzulegen. Bei dieser Ausführungsform wäre es möglich, dass ein derartiger Behandlungskopf für die Vorrichtung zum Umformen und ein Behandlungskopf für die Erwärmungseinrichtung vorliegen.

Daneben könnten jedoch auch kombinierte Behandlungssysteme bzw. Behandlungsköpfe vorgesehen sein, die - wie oben erwähnt - an einem Kopf zwei verschiedene Greiferarten aufweisen, beispielsweise einen für einen Blasformwechsel und einen für einen Heizdornwechsel. Dies hat den Vorteil, dass der eigentliche Kopf an dem Roboterarm nicht eingewechselt werden muss.

Bei einer weiteren Ausführungsform wäre es auch möglich, dass die Wechseleinrichtung auf einem frei verfahrbaren Wagen angeordnet ist und damit nicht nur für die hier beschriebene Vorrichtung Anwendung finden kann sondern auch für weitere Aggregate bzw. Einheiten wie etwa eine Fülleinrichtung, eine Etikettiereinrichtung und dergleichen.

Die oben beschriebene Anordnung der Wechseleinrichtung auf einem Schienensystem bietet den Vorteil, dass die Wechseleinrichtung an definierten Stellen über definierte Fahrwege verschoben werden kann. Auch hierdurch kann ein zentraler Bereich für die Bevorratung der Garniturenteile gewählt werden. Die Wechseleinrichtung holt sich dabei bevorzugt immer die für den jeweiligen Wechselvorgang benötigten Garniturensätze auf seinen Fahrwagen und puffert diese bevorzugt zwischenzeitlich. Ein Vorteil ergibt sich hier dadurch, dass platzraubende Garniturenmagazine an den Maschinen vor Ort wegfallen und nicht den Zugang an die Maschine behindern.

Bei einer weiteren vorteilhaften Ausführungsform ist die Wechseleinrichtung in einem Schutzbereich wie beispielsweise einem Schutzgehäuse angeordnet. Auf diese Weise kann verhindert werden, dass durch die Wechseleinrichtung Verletzungen bei Benutzern hervorgerufen werden. So wäre es beispielsweise möglich, dass ein Arm der Wechseleinrichtung so gestellt bzw. bewegt wird, dass die Wechseleinrichtung vollständig in dem Gehäuse Platzfinden kann.

Dabei kann dieses Gehäuse separat zu der genannten Vorrichtung stehen, es wäre jedoch auch möglich, dass die Wechseleinrichtung in einem hierfür vorgesehenen Bereich der gesamten Vorrichtung zum Herstellen von Behältnissen angeordnet ist.

Bei einer weiteren vorteilhaften Ausführungsform ist das wechselbare Element der Erwärmungseinrichtung aus einer Gruppe von Elementen ausgewählt, welche Haltedorne zum Halten der Kunststoffvorformlinge, Halteklammern zum Halten der Kunststoffvorformlinge, Abschirmelemente zum Abschirmen von Wärme gegenüber Bestandteilen der Kunststoffvorformlinge und dergleichen aufweist. Bei diesen Abschirmelementen kann es sich insbesondere um sogenannte Abschirmplatten handeln, welche die Wärme, die zweckgemäß auf dem Grundkörper der Kunststoffvorformlinge aufgebracht wird, von den nicht zu erwärmenden Bereichen und insbesondere den Mündungsbereichen der Kunststoffvorformlinge fernhält.

Bei einer weiteren vorteilhaften Ausführungsform weist die Vorrichtung wenigstens eine Magazineinrichtung zum Ablegen von Blasformeinrichtungen und/oder zum Ablegen von wechselbaren Elementen auf. So ist es möglich, dass die Wechseleinrichtung selbsttätig die Blasformen entnimmt und in dem besagten Magazin ablegt. Vorteilhaft weist die Vorrichtung zwei Magazine auf, wobei eines für Blasformeinrichtungen vorgesehen und bestimmt ist und das andere für Elemente der Erwärmungseinrichtung, wie beispielsweise die oben erwähnten Haltedorne.

Bei einer weiteren vorteilhaften Ausführungsform weist die Anlage eine weitere Behandlungseinrichtung zum Behandeln von Behältnissen auf. Weiterhin weist die Anlage und/oder die Behandlungseinrichtung eine Wechseleinrichtung auf, welche zum Wechseln wenigstens eines Verbrauchsmaterials und/oder wenigstens eines Garniturenteils dieser weiteren Behandlungseinrichtung geeignet und bestimmt ist. Bei dieser Ausführungsform ist die Erfindung damit auf eine Anlage gerichtet, die wenigstens zwei Behandlungsanlagen aufweist, etwa zwei Blasmaschinen, oder auch eine Blasmaschine und einen Füller oder auch einen Ofen sowie eine diesem nachgeschaltete Blasformmaschine. Dabei soll der Einsatz mehrerer Wechseleinrichtungen bzw. Robotern an der Anlage möglich sein oder auch der Einsatz eines Roboters, der an mehreren Behandlungseinrichtungen Aufgaben wahrnimmt. Dabei ist es möglich, dass diese Wechseleinrichtungen in einer gesamten Linie bzw. Anlage durch eine übergeordnete Steuerung miteinander kommunizieren. Damit ist es möglich, dass die gleiche bereits oben beschriebene Wechseleinrichtung zum Durchführen von Prozessen an unterschiedlichen Anlagen und Teilen dient. Es können aber auch mehrere Wechseleinrichtungen vorgesehen sein. Wie erwähnt, kann es sich bei den Behandlungseinrichtungen um zwei oder mehrere gleichartige Behandlungseinrichtungen handeln wie beispielsweise zwei Füller oder zwei Blasformmaschinen oder auch um verschiedene Behandlungseinrichtungen.

Es wird darauf hingewiesen, dass die hier beschriebene Ausgestaltung mit der weiteren Behandlungseinrichtung auch unabhängig von der oben beschriebenen Erfindung d.h. der Auswechslung von Blasformteilen von deren Blasformträgern Anwendung finden kann. Die Anmelderin behält sich vor, für eine derartige Ausgestaltung eigenständig Schutz zu beanspruchen. Auch wäre eine Anwendung dieser Ausgestaltung für Anlagen denkbar, welche keine Blasformmaschine aufweisen, etwa Anlagen, welche einen Füller und eine Etikettiermaschine aufweisen.

Bei einer weiteren vorteilhaften Ausführungsform ist diejenige Wechseleinrichtung, die geeignet und dazu bestimmt ist, zumindest die Blasformeinrichtungen von deren Blasformträgern zu entfernen und/oder Blasformeinrichtungen an den Blasformträgern anzuordnen auch dazu geeignet und bestimmt, wenigstens ein Verbrauchsmaterial oder wenigstens ein Garniturenteil dieser weiteren Behandlungseinrichtung zu wechseln. So ist es beispielsweise möglich, dass eine Wechseleinrichtung mobil, insbesondere fahrbar, ausgeführt ist und so zwischen unterschiedlichen Anlagenteilen bzw. Behandlungseinrichtungen fahren kann. Bevorzugt ist dabei die Anlage bzw. Linie bzw. die Wechseleinrichtung so angeordnet, dass eine Wechseleinrichtung die gesamte Linie bzw. Anlage erreichen kann. Dabei ist es möglich, dass die Anlage bzw. die Wechseleinrichtung bzw. - Einrichtungen so angeordnet sind, dass eine Wechseleinrichtung auch mehrere gleichartige Maschinenteile wie beispielsweise mehrere Blasmaschinen erreichen kann und an diesen verschiedene Tätigkeiten ausführt.

Bei einer weiteren vorteilhaften Ausführungsform ist die weitere Behandlungseinrichtung aus einer Gruppe von Behandlungseinrichtungen ausgewählt, welche Herstellungseinrichtungen zum Herstellen von Kunststoffvorformlingen, Fülleinrichtungen zum Befüllen von Behältnissen, Etikettiereinrichtungen zum Etikettieren von Behältnissen, Gruppiereinrichtungen zum Herstellen von Behältnisgruppen, Verpackungseinrichtungen zum Verpacken mehrerer Behältnisse, Verschließeinrichtungen zum Verschließen von Behältnissen, Umformungseinrichtungen zum Umformen von Kunststoffvorformlingen zu Kunststoffvorformlingen, Kombinationen hieraus und dergleichen enthält. Die Tätigkeiten, welche durch die jeweilige Wechseleinrichtung vorgenommen werden sind unterschiedlich. So wäre es beispielsweise möglich, dass im Falle einer Etikettiermaschine ein Etikettenwechsel vorgenommen wird, insbesondere wenn eine Etikettiermaschine vorgesehen ist, welche nicht eine Mehrzahl von Etikettenspulen (Multireel) aufweist. Daneben könnte im Fall einer Etikettiermaschine auch ein Schneckenwechsel vorgenommen werden, um auf diese Weise die Teilung zwischen aufeinanderfolgenden Behältnissen zu verändern.

Im Falle einer Packmaschine könnten ebenfalls Rollen mit Packmaterial nachgelegt werden. Daneben könnte aber auch eine Gassenführung zum Führen der Behältnisse verändert werden.

Bei Palettiersystemen könnten beispielsweise neue Zwischenlagen eingelegt werden oder auch die Funktionen Drehen und Verteilen übernommen werden. Daneben könnten auch zwei Wechseleinrichtungen vorgesehen sein, sodass beispielsweise im Fall eines Sortenwechsels eine Wechseleinrichtung abgezogen wird.

Bei Verwendung einer Fülleinrichtung können auch neue Garniturenteile eingelegt werden beispielsweise Füllelemente und dergleichen. Im Falle einer Verschließeinrichtung zum Verschließen von Behältnissen könnten beispielsweise Verschließerkonen und/oder Verschlüsse gewechselt werden. Falls es sich bei der Behandlungseinrichtung um eine Spritzgussmaschine handelt könnte beispielsweise das Spritzgusswerkzeug gewechselt werden.

Grundsätzlich könnte die Wechseleinrichtung eine Ver- und Entsorgung von Packmitteln übernehmen beispielsweise von Etiketten, Preforms Verschlüssen und dergleichen. Daneben könnte auch ein Palletieren in der Produktion kombiniert mit einem Formenwechsel im Falle eines Sortenwechsels vorgenommen werden, um auf diese Weise einen Palletierroboter einzusparen.

Daneben könnte durch die Wechseleinrichtung auch eine Anpassung der Anlage im Falle eines Mündungswechsels vorgenommen werden beispielsweise durch eine Auswechslung eines Blaskolbens oder von Haltedornen im Falle einer Blasformmaschine, oder auch von Klammern, einem Sägezahnstern und dergleichen.

Daneben könnte die Wechseleinrichtung auch mittelbar zur Unterstützung des Benutzers dienen. So könnte beispielsweise die Wechseleinrichtung mit einem Bediener durch die Anlage fahren, damit dieser auch manuell entsprechende Handgriffe vornehmen kann.

Daneben könnte die Wechseleinrichtung auch zum Behandeln des Produkts selbst insbesondere bei einer Behältnisinspektion (und/oder Preforminspektion) dienen um auf diese Weise eine Behandlung zwischen einzelnen Prüfstationen zu erreichen.

Daneben könnten auch durch die Wechseleinrichtung Qualitätskontrollen vorgenommen werden. Schließlich wäre es auch möglich, dass Bedieneraufgaben wie die Wartung, die Instandhaltung, die Versorgung oder die Entsorgung durch die Wechseleinrichtung übernommen werden.

Einer weiteren vorteilhaften Ausführungsform ist wenigstens eine Wechseleinrichtung zwischen wenigstens zwei Behandlungseinrichtungen bewegbar. So könnte beispielsweise ein Schienensystem vorgesehen sein, welches ein Verschieben der entsprechenden Wechseleinrichtung zwischen den beiden Behandlungseinrichtungen ermöglicht. Auf diese Weise kann die Wechseleinrichtung Arbeitsvorgänge an beiden Behandlungseinrichtungen durchführen.

Daneben könnte aber auch ein fahrerloses Transportsystem vorgesehen sein, wobei die Wechseleinrichtung beispielsweise über ein Schienensystem oder eine GPS - Führung zwischen mehreren Behandlungseinrichtungen fahren kann.

Einer weiteren vorteilhaften Ausführung weist die Anlage eine Lagereinrichtung für Garnituren auf, sodass beispielsweise bestimmte Garniturenteile und/oder Verbrauchsmaterial dort gelagert und gegen andere Garniturenteile ausgetauscht werden können.

Bei einer weiteren vorteilhaften Ausführungsform ist wenigstens eine Wechseleinrichtung geeignet und dazu bestimmt, Garniturenteile und/oder Verbrauchsmaterial aus der Lagereinrichtung zu entnehmen und/oder Garniturenteile der Lagereinrichtung zuzuführen.

Die vorliegende Erfindung ist weiterhin auf ein Verfahren zum Herstellen von Kunststoffbehältnissen gerichtet, wobei Kunststoffvorformlinge mittels einer Erwärmungseinrichtung erwärmt werden und die Kunststoffvorformlinge während ihrer Erwärmung mittels einer Transporteinrichtung transportiert werden.

Dabei weist diese Erwärmungseinrichtung bzw. die Transporteinrichtung eine Vielzahl von Halteelementen zum Halten der Kunststoffvorformlinge auf. Weiterhin werden die Kunststoffvorformlinge nach ihrer Erwärmung mittels einer (der Erwärmungseinrichtung nachgeordneten) Vorrichtung zum Umformen expandiert und zu den Kunststoffbehältnissen umgeformt. Diese Vorrichtung zum Umformen weist dabei eine Transporteinrichtung auf, welche die Kunststoffvorformlinge entlang eines vorgegebenen Transportpfades transportiert und weiterhin weist die Transporteinrichtung einen beweglichen und zumindest mittelbar an einem stationären Basisträger angeordneten Stationsträger auf, an dem eine Vielzahl von Umformungsstationen angeordnet ist, wobei diese Umformungsstationen jeweils Blasformeinrichtungen aufweisen, welche jeweils Hohlräume ausbilden, innerhalb derer die Kunststoffvorformlinge zu den Kunststoffbehältnissen umgeformt werden und wobei diese Blasformeinrichtungen jeweils an Blasformträgern angeordnet sind.

Erfindungsgemäß werden wenigstens zeitweise mittels einer Wechseleinrichtung zumindest die Blasformeinrichtungen von deren Blasformträgern entnommen und/oder Blasformeinrichtungen an den Blasformträgern angeordnet. Weiterhin entfernt diese Wechseleinrichtung wenigstens zeitweise wenigstens ein wechselbares Element der Erwärmungseinrichtung von der Erwärmungseinrichtung oder ordnet ein wechselbares Element an dieser Erwärmungseinrichtung an. Bei dieser Erwärmungseinrichtung handelt es sich bevorzugt um einen Infrarotofen, es wäre jedoch auch die Verwendung von Mikrowellenöfen denkbar.

Bei einem bevorzugten Verfahren wird wenigstens zeitweise ein Arbeitselement der Wechseleinrichtung in einen Arbeitsbereich der Erwärmungseinrichtung bewegt und es wird wenigstens zeitweise eine Arbeitselement der Wechseleinrichtung in einen Arbeitsbereich der Vorrichtung zum Umformen bewegt. Damit ist es also möglich, das gleiche Arbeitselement für beide Zwecke, d.h. zum Wechseln der Blasformeinrichtungen und auch zum Wechseln von Elementen der Erwärmungseinrichtungen einzusetzen.

Bei diesem Element kann es sich beispielsweise um einen Endbereich eines Wechselarmes handeln oder auch um den oben erwähnten Behandlungskopf, an dem Greifer angeordnet werden. Unter dem Arbeitsbereich wird, wie oben erwähnt, insbesondere ein räumlicher Bereich verstanden, durch den das jeweilige einzuwechselnde Element bewegbar ist, etwa die Position, in der normalerweise ein Wechsel von derartigen Wechselelementen stattfindet. Im Falle der Erwärmungseinrichtung kann es sich hierbei beispielsweise um einen Umlenkbereich handeln, um den eine Kette mit einer Vielzahl von Halteelementen geführt wird.

Bei einer weiteren vorteilhaften Ausführungsform wird mittels eines Entriegelungselementes besonders bevorzugt durch die Wechseleinrichtung eine Verriegelung zwischen der Erwärmungseinrichtung und einem zu wechselnden Bauteil gelöst.

Vorteilhaft kann auch mittels einer Verriegelungseinrichtung, insbesondere durch die Wechseleinrichtung, eine derartige Verriegelung zwischen einem eingewechselten Element und dessen Träger bzw. einem anderen Bereich der Vorrichtung zum Umformen und/oder der Erwärmungseinrichtung hergestellt werden.

Bei einem weiteren bevorzugten Verfahren werden zu wechselnde Bauteile in einer Magazineinrichtung abgelegt. Dabei kann es sich um eine Magazineinrichtung handeln, welche eine separate Lagerung der einzelnen Wechselelemente ermöglicht.

Weiterhin wäre es möglich, im Rahmen des Wechselvorgangs auch Reinigungsvorgänge an den Blasformeinrichtungen und/oder den Wechseleinrichtungen durchzuführen. So wäre es möglich, dass die Wechseleinrichtung auch bewirkt, dass das zu wechselnde Bauteil mit einem Reinigungs -und/oder Sterilisationsmedium beaufschlagt wird. So könnte beispielsweise das zu wechselnde Element in ein Bad mit Reinigungsmittel und/oder Sterilisationsmittel eingetaucht werden. Auch wäre es möglich, dass das zu wechselnde Bauteil mittels einer Beaufschlagungseinrichtung mit einem Sterilisationsmedium und/oder Reinigungsmedium baufschlagt wird. Auch durch diese Vorgehensweise kann ein vollautomatischer Wechsel der jeweiligen Bauteile erreicht werden.

Bevorzugt ist die Wechseleinrichtung weiterhin dazu geeignet und bestimmt, während eines weiteren Betriebsmodus, der sich von dem Wechselbetrieb unterscheidet, einen Behandlungsvorgang an wenigstens einem für die Vorrichtung bestimmten Arbeitselement durchzuführen. Es wäre jedoch auch denkbar, dass die Wechseleinrichtung zum Wechseln von weiteren Bauteilen, wie z.B. Reckstangen, Transfersternen und dergleichen eingesetzt wird.

Es wird daher vorgeschlagen, dass die Wechseleinrichtung nicht nur zum Wechseln von Blasformen dient, sondern insbesondere zu anderen Zeiten auch andere Aufgaben übernehmen kann, wie beispielsweise die Reinigung oder die Wartung von Bauteilen, wie beispielsweise Blasformen. So ist es beispielsweise möglich, dass die Wechseleinrichtung, bei der es sich insbesondere, aber nicht ausschließlich, um einen Roboter handeln kann, beispielsweise während der Behältnisproduktion Reinigungs- und Wartungsarbeiten durchführen kann, beispielsweise an ausgebauten Blasformen.

Dies ist insbesondere dann vorteilhaft, wenn häufige Wechsel von Blasformen vorgenommen werden müssen. Anstelle eines Roboters wird ein sogenannter Manipulator eingesetzt. Ein Manipulator kompensiert das Eigengewicht eines zu bewegenden Werkstücks, wie etwa einer Blasform, um die Bedienung zu erleichtern. Der Bediener kann den Manipulator, an dessen Ende der Formengreifer befestigt ist, führen. Ein derartiger Wechsel mittels eines Manipulators wird nicht automatisch durchgeführt bzw. ohne Bediener. Es wird darauf hingewiesen, dass die Ausgestaltung der Wechseleinrichtung als Manipulator auch unabhängig davon eingesetzt werden kann, ob die Wechseleinrichtung außerhalb des Wechselmodus noch andere Tätigkeiten durchführt.

Die Anmelderin behält sich daher vor, auch auf die Ausführung einer Wechseleinrichtung als sogenannter Manipulator bzw. durch Personen zu bedienendes Bauteil, Schutz zu beanspruchen. Ein derartiger Manipulator hat gegenüber einem Roboter geringere Herstellkosten.

Auch wird darauf hingewiesen, dass die Wechseleinrichtung auch für Aufgaben eingesetzt werden kann, welche die Umformungseinrichtung nicht unmittelbar betreffen, etwa zu Reinigungsvorgängen an Füllelementen eines Füllers.

Daneben ist üblicherweise auch kein Abgrenzungsbereich nötig, um diesen Manipulator bzw. Roboter unterzubringen. Daneben ist auch die Technik für einen derartigen Manipulator einfacher und kostengünstiger und eignet sich beispielsweise für Länder mit geringeren technischen Standards.

Gleichwohl erlaubt jedoch ein derartiger Manipulator ebenfalls den Austausch der Blasformeinrichtung als Paket, das heißt insbesondere einschließlich sämtlicher Teile der Blasform. Damit ist auch hier ein schnelles und ergonomisches Wechseln möglich.

Im Übrigen können jedoch die weiteren Komponenten einer derartigen Wechseleinrichtung gleichbleiben, wie beispielsweise die Formen, das Magazin, die Blasstation und der Betätiger. Ein derartiger Manipulator bringt den Vorteil, dass er ohne großen Aufwand umsetzbar ist und sich insbesondere auch an Kunden richten kann, die ein schnelles Wechseln ohne eine automatische Wechseleinrichtung wünschen.

Zum Bestücken eines Magazins mit den Blasformen können beispielsweise die Blasformen als Paket einmalig von einem Bediener in entsprechende Öffnungen geschoben werden. Da ein derartiges Formenpaket einer Blasform vorzugswiese keine Griffe oder Ähnliches aufweist und die drei Bauteile (Formhälften und Boden) nicht zueinander fixiert sind, ist dies im Allgemeinen ohne geeignetes Werkzeug schwer durchzuführen. Für diese Aufgabe kann der Bediener ein einfaches Werkzeug verwenden, welches den Greiferkopf des Roboters nachbildet, um das Formenpaket zu greifen. Über einen Form- und Kraftschluss wird bevorzugt ein sicheres Halten gewährleistet.

Bei einer weiteren vorteilhaften Ausführungsform weist daher die Wechseleinrichtung eine Greifeinrichtung zum Greifen der Blasformeinrichtung auf, wobei diese Greifeinrichtung in wenigstens zwei unterschiedliche Richtungen beweglich ist. Vorteilhaft ist diese Greifeinrichtung um wenigstens drei unterschiedliche Achsen schwenkbar. Vorteilhaft ist sie um sechs Achsen schwenkbar.

Bevorzugt ist die Greifeinrichtung an einem Arm angeordnet, wobei dieser Arm ebenfalls beweglich ist. Vorteilhaft kann die Greifeinrichtung von diesem Arm besonders bevorzugt automatisch getrennt werden. Dabei ist es zusätzlich möglich, dass auch Medienverbindungen automatisch getrennt werden.

Durch die Erfindung ist es möglich, dass die Wechseleinrichtung im bestimmten Betriebsmodus und insbesondere während der Produktion der Blasmaschine eine zu einem nächsten Wechselvorgang notwendige Tätigkeit ausführt, beispielsweise ein Reinigen der Blasformen oder ein Beladen des Magazins.

Bei einer weiteren vorteilhaften Ausführungsform weist die Wechseleinrichtung wenigstens eine Behandlungseinrichtung zum Behandeln des Arbeitselements auf. Dabei kann es sich beispielsweise um ein Reinigungselement handeln, welches zum Reinigen des besagten Arbeitselements dient. Dieses Reinigungselement kann beispielsweise eine Düse aufweisen, welche zum Beaufschlagen einer Oberfläche des Arbeitselements mit einem Reinigungs- und oder Sterilisationsmediums dient. Daneben kann die Behandlungseinrichtung auch eine Sterilisationseinrichtung aufweisen, etwa eine Beaufschlagungseinrichtung, welche das Arbeitselement mit einem Sterilisationsmedium beaufschlagt oder auch eine Strahlungseinrichtung, welche das Arbeitselement zu dessen Sterilisation einer Strahlung aussetzt.

Bevorzugt ist daher der oben genannte Betriebsmodus ein Produktionsmodus der Vorrichtung. Hier wird damit vorgeschlagen, dass während eines Arbeitsbetriebs der Anlage, das heißt während eines Betriebs, in dem Behältnisse gefertigt werden, gleichzeitig die Wechseleinrichtung andere Tätigkeiten vornimmt.

Bei einer weiteren vorteilhaften Ausführungsform ist der Behandlungsvorgang aus einer Gruppe von Behandlungsvorgängen ausgewählt, welche Reinigungsvorgänge, Wartungsvorgänge, Sterilisationsvorgänge, Kombinationen hieraus und dergleichen enthält.

Bei einer weiteren vorteilhaften Ausführungsform ist das Arbeitselement aus einer Gruppe von Arbeitselementen ausgewählt, welche Blasformen, Greifelemente, Haltedornen zum Halten der Behältnisse, Reckstangen, Blasdüsen, Füllventile und dergleichen enthält. Bei einer weiteren bevorzugten Ausführungsform dient das besagte Arbeitselement ebenfalls zum Behandeln der Behältnisse. Damit kann es sich um eines der oben genannten Arbeitselemente handeln, welches beispielsweise das Behältnis greift oder in sonstiger Weise behandelt, wie etwa befüllt, in dessen Längsrichtung dehnt (Reckstange), oder dergleichen.

Bei einer weiteren vorteilhaften Ausführungsform ist die Behandlungseinrichtung durch die Greifeinrichtung austauschbar. Dies bedeutet, dass an dem gleichen Arm sowohl die Greifeinrichtung angeordnet sein kann, als auch die Behandlungseinrichtung. Dabei ist es möglich, dass die Greifeinrichtung durch die Behandlungseinrichtung ausgetauscht wird bzw. umgekehrt, um die jeweiligen Vorgänge durchzuführen. Mit anderen Worten ist es möglich, dass ein Formengreifer an einem Roboterarm durch eine Behandlungseinrichtung ausgetauscht wird. Es wäre jedoch möglich, dass an den Roboterarm sowohl ein Formengreifer als auch eine Behandlungseinrichtung angeordnet sind, und diese beispielsweise durch eine bestimmte Bewegung gegeneinander eingetauscht werden können. So ist es beispielsweise möglich, dass die Wechseleinrichtung eine Greifeinrichtung ablegt und an die entsprechende Schnittstelle - bevorzugt selbständig - ein Arbeitsgerät anbindet, um diese Tätigkeit zu erledigen.

Bevorzugt erfolgt eine Reinigung der Blasformeinrichtungen durch die Wechseleinrichtung. Bei einer weiteren bevorzugten Ausführungsform setzt die Wechseleinrichtung die Formen für die Reinigung in einen zusammengesetzten Zustand in eine Reinigungsanlage.

Bei einer weiteren vorteilhaften Ausführungsform nimmt eine entsprechende Reinigungsanlage die zusammengesetzten Blasformeinrichtungen auseinander, um so eine allseitige Reinigung zu ermöglichen.

Bei einer weiteren vorteilhaften Ausführungsform ist es auch möglich, dass die Greifeinrichtung mechanisch und insbesondere ohne Bedienereingriff (bevorzugt formflüssig) mit der Wechseleinrichtung verbunden werden kann. Vorteilhaft können während bzw. bei dieser Verbindung gleichzeitig Medien, wie beispielsweise Druckluft und Steuersignale, angekoppelt werden.

Es ist weiterhin möglich, dass zu einem manuellen Be- und Entladen eines Magazins mit den Blasformeinrichtungen ein Handhabungswerkzeug verwendet wird, welches nach dem Prinzip eines glatten Greifers ausgeführt ist.

Bei einer weiteren vorteilhaften Ausführungsform ist es auch möglich, dass die Wechseleinrichtung Elemente aufweist, welche beim Einlegen einer Blasform und auch bevorzugt beim Entnehmen einer Blasformeinrichtung Medien, die zur Temperierung der Blasformeinrichtung notwendig sind, bevorzugt automatisch, ankoppelt oder abkoppelt.

Dabei ist es möglich, dass die Wechseleinrichtung zum An- oder Abkuppeln dieser Medien einen Greiferkopf wechselt.

Bei einer weiteren vorteilhaften Ausführungsform wäre es auch möglich, dass während einer Einlegebewegung der Blasformeinrichtung durch die Wechseleinrichtung in die Blasformträger Medien angekuppelt bzw. abgekoppelt werden.

Dabei sind derartige Kupplungen bevorzugt so ausgerichtet, dass eine Einlege- und auch die An- und Abkoppelbewegung im Wesentlichen parallel zu einer Reckstange der Vorrichtung erfolgt. Auf diese Weise können die Ankoppel- und Abkoppelvorgänge erleichtert werden.

Bei einer weiteren vorteilhaften Ausführungsform weist die Vorrichtung eine Bedieneinrichtung zum Bedienen der Wechseleinrichtung auf. Diese Bedieneinrichtung weist vorteilhaft auch einen Touch-Bildschirm auf und bevorzugt auch einen Roboter Controller. Bevorzugt können diese genannten Einrichtungen von mehreren Maschinen genutzt werden und bevorzugt sind sie über eine genormte Schnittstelle aneinander angebunden.

Bei einer weiteren vorteilhaften Ausführungsform ist die Greifeinrichtung an einem um wenigstens eine vorgegebene Schwenkachse schwenkbaren Arm angeordnet. Auf diese Weise wird die Bewegungsfähigkeit der Greifeinrichtung erhöht.

Bei einer weiteren vorteilhaften Ausführungsform weist die Vorrichtung ein zumindest den Stationsträger und die Blasformeinrichtung wenigstens teilweise umgebendes Gehäuse auf und bevorzugt ist die Wechseleinrichtung außerhalb dieses Gehäuses angeordnet. Dieses Gehäuse dient insbesondere auch als Schutz des Bedieners. Damit die Wechseleinrichtung auch innerhalb des Betriebsmodus andere Tätigkeiten ausführen kann, ist jedoch die Wechseleinrichtung bevorzugt außerhalb dieses Gehäuses angeordnet. Bevorzugt weist dabei die Wechseleinrichtung Öffnungs- und Schließeinrichtungen auf, welche dieses Gehäuse öffnen können, insbesondere um nach einem Arbeitsbetrieb Blasformen auszuwechseln. Damit ist es bevorzugt möglich, dass die Wechseleinrichtung den Maschinenschutz der Blasmaschine, insbesondere für den Formwechselgang, öffnet und schließt. Bevorzugt weist dabei dieser Schutzbereich ein Öffnungselement auf, welches von der Greifeinrichtung der Wechseleinrichtung zum Öffnen und Schließen des Schutzbereichs gegriffen werden kann.

So kann beispielsweise an einer Tür des Schutzbereichs ein Gegenstück angeordnet sein, welches von der Greifeinrichtung gegriffen werden kann.

Bei einer weiteren vorteilhaften Ausführungsform weist die Vorrichtung auch einen Schutzbereich für die Wechseleinrichtung auf. Dieser Schutzbereich kann dabei die Wechseleinrichtung während des Blasformwechsels zumindest teilweise umgeben und kann die Wechseleinrichtung auch außerhalb des Wechselmodus zumindest zeitweise umgeben.

Die vorliegende Erfindung ist weiterhin auf ein Verfahren zum Betreiben einer Umformungseinrichtung zum Umformen von Kunststoffvorformlingen zu Kunststoffbehältnissen gerichtet, wobei in einem Arbeitsbetrieb der Vorrichtung die Kunststoffvorformlinge mittels einer Vielzahl von Umformungsstationen entlang eines vorgegebenen Transportpfads transportiert werden und durch Beaufschlagung mit einem fließfähigen und insbesondere gasförmigen Medium zu den Kunststoffbehältnissen expandiert werden. Weiterhin werden zum Expandieren der Kunststoffvorformlinge Blasformeinrichtungen verwendet, in deren Inneren die Kunststoffvorformlinge zu den Kunststoffbehältnissen expandiert werden. Weiterhin wird in einem Wechselbetrieb der Vorrichtung zumindest eine der Blasformeinrichtungen der Vorrichtung entnommen und/oder eine der Blasformeinrichtungen an einem Blasformträger der Vorrichtung angeordnet.

Vorteilhaft wird zum Wechseln der Blasformeinrichtungen eine Wechseleinrichtung verwendet, welche eine Greifeinrichtung zum Greifen der Blasformeinrichtung aufweist, wobei diese Wechseleinrichtung in einem weiteren Betriebsmodus einen weiteren Behandlungsvorgang durchführt. Vorteilhaft handelt es sich bei diesem weiteren Betriebsmodus um einen Arbeitsbetrieb der Vorrichtung, in dem auch Kunststoffvorformlinge zu Kunststoffbehältnissen expandiert werden.

Zusätzlich oder alternativ wäre es auch möglich, dass die Wechseleinrichtung als manuelle Wechseleinrichtung, insbesondere als Manipulator, ausgeführt ist. Mittels eines derartigen Manipulators kann der Benutzer, wie oben erwähnt, auch manuell Wechselvorgänge durchführen, wobei er hierzu jedoch deutlich geringere Kräfte ausführen muss, als für einen rein manuellen Wechselvorgang.

Bei einer weiteren vorteilhaften Ausführungsform ist die Wechseleinrichtung in der oben beschriebenen Weise ausgeführt, wobei beispielsweise bevorzugt zumindest zeitweise eine Greifeinrichtung der Wechseleinrichtung durch eine Behandlungseinrichtung zum Behandeln eingewechselt wird. Vorteilhaft erfolgt dieses Einwechseln ebenfalls automatisch.

Bevorzugt handelt es sich, wie oben erwähnt, bei dem Behandlungsvorgang um einen Reinigungs- und/oder Sterilisationsvorgang. Dabei kann, wie oben erwähnt, nicht nur eine Blasformeinrichtung behandelt werden, sondern auch andere Elemente wie etwa Reckstangen, Blasdüsen, Fülleinrichtungen und dergleichen.

Bei einer weiteren vorteilhaften Ausführungsform ist die Greifeinrichtung an einem um eine vorgegebene erste Schwenkachse schwenkbaren Arm angeordnet. Dieser Arm wird im Folgenden aufgrund seiner Anordnung in der Wechseleinrichtung auch als zweiter Arm bezeichnet. Dabei kann die Greifeinrichtung selbst wiederum schwenkbar bzw. drehbar an diesem Arm angeordnet sein.

Bei einer weiteren vorteilhaften Ausführungsform ist der schwenkbare (zweite) Arm an einem weiteren um eine vorgegebene zweite Schwenkachse schwenkbaren Arm angeordnet. Dieser weitere Arm wird im Folgenden auch aufgrund seiner Anordnung in der Wechseleinrichtung als erster Arm bezeichnet. Dabei ist die erste Schwenkachse vorteilhaft nicht parallel zu der zweiten Schwenkachse und besonders bevorzugt windschief im mathematischen Sinne. Bereits durch diese beiden Achsen können zwei Freiheitsgrade der Bewegung der Greifeinrichtung erreicht werden. Vorteilhaft ist die Greifeinrichtung schwenkbar an dem zweiten Arm angeordnet. Durch diese schwenkbare Anordnung wird ein weiterer Freiheitsgrad in der Bewegung ermöglicht. Vorteilhaft ist die Greifeinrichtung um zwei Achsen bezüglich des zweiten Arms schwenkbar, beispielsweise um eine Achse, welche in der Richtung dieses Arms verläuft und auch um eine hierzu senkrechte Achse.

Vorteilhaft ist die Greifeinrichtung damit schwenkbar bezüglich wenigstens zwei zueinander senkrechten Achsen an dem ersten Arm angeordnet.

Bevorzugt ist die Greifeinrichtung schwenkbar bezüglich wenigstens vier Achsen, bevorzugt schwenkbar bezüglich wenigstens fünf Schwenkachsen und bevorzugt schwenkbar bezüglich wenigstens 6 Schwenkachsen angeordnet.

Bevorzugt ist wenigstens eine dieser (geometrischen Schwenkachsen ortsfest. Bevorzugt ist diese ortsfeste Schwenkachse vertikal ausgerichtet. Bevorzugt ist wenigstens eine Achse stets, d.h. unabhängig von einer Position der Wechseleinrichtung und/oder der Greifeinrichtung in einer raumfesten Ebene angeordnet. Diese raumfeste Ebene ist dabei bevorzugt eine horizontale Ebene. Bevorzugt sind wenigstens zwei Achsen stets, d.h. unabhängig von einer Position der Wechseleinrichtung und/oder der Greifeinrichtung stets in einer raumfesten Ebene angeordnet.

Bevorzugt ist wenigstens ein Paar von Achsen vorhanden, welche stets, d.h. unabhängig von einer Position der Wechseleinrichtung und/oder der Greifeinrichtung senkrecht zueinander stehen. Bevorzugt ist bezüglich dieser beiden Schwenkachsen der erste Arm gegenüber einem (insbesondere stationären) Träger bewegbar.

Bevorzugt ist wenigstens ein weiteres Paar von Achsen vorhanden, welche stets, d.h. unabhängig von einer Position der Wechseleinrichtung und/oder der Greifeinrichtung senkrecht zueinander stehen. Bevorzugt ist bezüglich .dieser beiden Schwenkachsen der zweite Arm gegenüber dem ersten Arm bewegbar.

Bevorzugt ist wenigstens ein weiteres Paar von Achsen vorhanden, welche stets, d.h. unabhängig von einer Position der Wechseleinrichtung und/oder der Greifeinrichtung senkrecht zueinander stehen. Bevorzugt ist bezüglich dieser beiden Schwenkachsen die Greifeinrichtung gegenüber dem zweiten Arm bewegbar.

Die hier beschriebene Anordnung der (geometrischen) Schwenkachsen eignet sich in besonderer Weise um eine hohe Bewegungsfreiheit der Greifeinrichtung zu ermöglichen.

Bevorzugt sind wenigstens zwei Schwenkachsen stets, d.h. unabhängig von einer Position der Wechseleinrichtung und/oder der Greifeinrichtung parallel zueinander

Bei einer weiteren vorteilhaften Ausführungsform weist die Greifeinrichtung ein Eingriffsmittel auf, um wenigstens einen an der Blasformeinrichtung angeordneten Vorsprung zu greifen. Vorteilhaft weist die Greifeinrichtung zwei Eingriffsmittel auf, um zwei an der Blasformeinrichtung angeordnete Vorsprünge zu greifen. Dabei kann an zwei Blasformteilen jeweils ein solcher Vorsprung angeordnet sein und die Greifeinrichtung kann diesen während des Transports hintergreifen, um so die Blasformeinrichtung in ihrer Gesamtheit zusammenhalten zu können.

Bei einer weiteren vorteilhaften Ausführungsform ist der zweite Arm bezüglich des ersten Arms um wenigstens zwei Schwenkachsen schwenkbar. Vorteilhaft handelt es sich hierbei um zueinander senkrechte Schwenkachsen.

Bei einer weiteren vorteilhaften Ausführungsform ist die Greifeinrichtung form- und/oder kraftschlüssig mit der Blasformeinrichtung verbindbar. Auf diese Weise kann ein sicheres Greifen und Transportieren der Blasformeinrichtungen mittels der Wechseleinrichtung ermöglicht werden, wobei auch ein Transportieren mit höheren Geschwindigkeiten möglich ist.

Bei einer weiteren vorteilhaften Ausführungsform weist die Greifeinrichtung ein passives Greifelement auf. Hierunter wird insbesondere verstanden, dass ein Halten der Blasformeinrichtung nicht durch eine aktive Greifbewegung des Greifelements erfolgt, etwa durch eine Klammerbewegung, sondern lediglich durch eine korrekte Positionierung der des Greifelements bzw. der Greifeinrichtung gegenüber den zu transportierenden Blasformeinrichtungen. So kann insbesondere ein Element der Greifeinrichtung einen Abschnitt der Blasformeinrichtung hintergreifen.

Daneben ist es auch möglich, dass die Greifeinrichtung ein magnetisches bzw. magnetisierbares Element aufweist, um die Blasformeinrichtung zu halten. So könnte die Greifeinrichtung etwa einen Elektromagneten aufweisen, der aktivierbar ist, sobald sich die Greifeinrichtung in einer vorgegebenen Position gegenüber der Blasformeinrichtung befindet. Auch könnte durch die Greifeinrichtung ein magnetischer Halt zwischen Teilen der Blasformeinrichtung ausgelöst werden.

Bei einer weiteren vorteilhaften Ausführungsform weist die Wechseleinrichtung eine Steuerungseinrichtung auf, welche eine Entfernung der Blasformeinrichtung von den Blasformträgern und/oder eine Anordnung der Blasformeinrichtung an den Blasformträgern sowohl kraftals auch weggesteuert durchführt. Dabei können Erfassungseinrichtungen vorgesehen sein, welche eine Bewegung, insbesondere der Greifeinrichtung, erfassen und es können auch Erfassungseinrichtungen zum Messen von Kräften vorgesehen sein.

Durch diese Steuerung ist es auch möglich, einen oder mehrere Referenzpunkte an der Blasstation und/oder dem Magazin zu definieren, die angefahren werden können. Auf diese Weise kann auch die exakte geometrische Lage der Blasformeinrichtung zu jedem Zeitpunkt des Transports bestimmt werden. Weiterhin ist es bevorzugt, dass die Greifeinrichtung in mehreren Freiheitsgraden, zum Beispiel in eine X-, Y- und Z-Richtung auslenkbar ist, insbesondere, um Ungenauigkeiten einer Positionierung zu egalisieren. Dabei wäre es jedoch auch möglich, dass einer oder mehrere dieser Freiheitsgrade elektromechanisch blockiert werden können. Auf diese Weise kann ein schnellerer Arbeitsbetrieb der Vorrichtung erreicht werden.

Vorteilhaft ist eine Erfassungseinrichtung vorgesehen, welche die Position bzw. eine Auslenkung bezüglich dieser Freiheitsgrade erfassen kann, bevorzugt, indem sie diese beispielsweise elektrisch abfragt.

Bei einer weiteren vorteilhaften Ausführungsform weist die Greifeinrichtung aktive Elemente auf, welche einen Form- und Kraftschluss mit der Blasformeinrichtung herstellen. Dabei ist es möglich, dass die Greifeinrichtung eine formschlüssige Verbindung zwischen den beiden Seitenteilen der Blasformeinrichtung herstellt und weiterhin bevorzugt eine kraftschlüssige Verbindung zwischen den besagten Blasformhälften und der Bodenform hergestellt wird.

Diese zweite Verbindung mit der Bodenform kann dabei über entsprechende Eingriffselemente der Seitenteile und/oder der Bodenform erreicht werden.

Bei einer weiteren vorteilhaften Ausführungsform weist die Vorrichtung, insbesondere die Greifeinrichtung Zentrierelemente auf, um eine exakte Positionierung der Greifeinrichtung an der Blasformeinrichtung bzw. an der Umformungsstation zu ermöglichen. Diese Zentrierelemente können dabei Einführschrägen, beispielsweise konische Einführschrägen, aufweisen, mit denen die Greifeinrichtung beim Wechselvorgang in korrespondierende Elemente an der Umformungsstation eingreift oder diese korrespondierenden Elemente kontaktiert. Vorteilhaft sind diese korrespondierenden Elemente an einem Formträgerhalter angeordnet. Auf diese Weise kann die Greifeinrichtung gegenüber der zu transportierenden Blasformeinrichtung positioniert werden.

Die vorliegende Erfindung ist weiterhin auf ein Verfahren zum Betreiben einer Umformungseinrichtung zum Umformen von Kunststoffvorformlingen zu Kunststoffbehältnissen gerichtet. Dabei werden in einem Arbeitsbetrieb der Vorrichtung die Kunststoffvorformlinge mittels einer Vielzahl von Umformungsstationen entlang eines vorgegebenen Transportpfades transportiert und durch Beaufschlagung mit einem fließfähigen und insbesondere mit einem gasförmigen Medium zu den Kunststoffbehältnissen expandiert. Weiterhin werden zum Expandieren der Kunststoffvorformlinge Blasformeinrichtungen verwendet, in deren Inneren die Kunststoffvorformlinge zu den Kunststoffbehältnissen expandiert werden. Weiterhin wird in einem Wechselbetrieb zumindest eine der Blasformeinrichtungen der Vorrichtung entnommen und/oder eine der Blasformeinrichtungen an einen Blasformträger der Vorrichtung angeordnet.

Erfindungsgemäß wird zum Wechseln der Blasformeinrichtungen eine bevorzugt automatisch arbeitende Wechseleinrichtung verwendet, welche eine Greifeinrichtung zum Greifen der Blasformeinrichtung aufweist, wobei diese Greifeinrichtung in wenigstens zwei unterschiedliche Richtungen bewegbar ist. Bevorzugt ist die Greifeinrichtung bezüglich wenigstens dreier, bevorzugt bezüglich wenigstens vierer Schwenkachsen schwenkbar.

Bevorzugt wird eine Wechseleinrichtung der oben beschriebenen Art verwendet.

Bevorzugt weist diese Wechseleinrichtung wenigstens einen schwenkbaren Wechselarm auf und ist wenigstens mittelbar an dem Basisträger angeordnet. Es wird daher vorgeschlagen, eine Wechseleinrichtung, insbesondere in Form eines Wechselroboters direkt im Bereich der Vorrichtung zum Umformen anzuordnen. Vorteilhaft weist daher diese Vorrichtung einen Basisträger, wie etwa ein Maschinengestell, auf, an dem auch der Stationsträger angeordnet ist. An diesem Basisträger ist wiederum auch der Wechselroboter angeordnet, sodass er insgesamt in die Maschine integriert werden kann.

Unter einer wesentlich mittelbaren Anordnung wird dabei verstanden, dass die Wechseleinrichtung direkt an dem Basisträger angeordnet sein kann, es aber auch denkbar ist, dass die Wechseleinrichtung an einem weiteren Element angeordnet ist, etwa einem Zwischenträger, der wiederum wiederrum an dem Basisträger angeordnet ist.

Es wird damit eine Integration der Wechseleinrichtung bzw. des Roboters in die Maschine vorgeschlagen. Vorteilhaft ist die Blasformeinrichtung mehrteilig ausgebildet und weist zumindest zwei Seitenteile und ein Bodenteil auf. Im Betrieb bilden diese drei Teile den besagten Hohlraum zum Expandieren der Kunststoffvorformlinge aus. Vorteilhaft sind wenigstens zwei Teile und besonders bevorzugt alle drei Teile dieser Blasformeinrichtung miteinander verriegelbar, sodass die Blasform in ihrer Gesamtheit aus der Maschine bzw. von dem Blasformträger entfernt werden kann. Der Blasformträger ist damit zur Aufnahme unterschiedlicher Blasformeinrichtungen geeignet. Dabei wäre es möglich, dass die Blasformeinrichtung selbst noch mittels Trägerschalen an dem Blasformträger angeordnet ist.

Vorteilhaft sind die Blasformträger bezüglich einander bewegbar und insbesondere schwenkbar. Dabei können in einem Arbeitsbetrieb die Blasformträger um einen vorgegebenen Schwenkwinkel auseinandergeschwenkt werden, um Kunststoffvorformlinge einzubringen und/oder um gefertigte Behältnisse zu entnehmen. Dabei sind bevorzugt für den Wechselbetrieb größere Öffnungswinkel möglich.

Bei einer weiteren vorteilhaften Ausführungsform weisen die Umformungsstationen jeweils Reckstangen auf, die im Betrieb in die Kunststoffvorformlinge einführbar sind, um diese in deren Längsrichtung zu dehnen. Vorteilhaft weisen die einzelnen Umformungseinrichtungen auch Beaufschlagungseinrichtungen auf, welche insbesondere Blasdüsen aufweisen, welche im Betrieb die Kunststoffvorformlinge mit einem fließfähigen und insbesondere einem gasförmigen Medium beaufschlagen. Es wäre dabei möglich, dass auch andere Teile der Umformungsstationen ausgewechselt werden, wie insbesondere die besagte Beaufschlagungseinrichtung bzw. Blasdüsen und/oder die Reckstangen.

Vorteilhaft handelt es sich bei dem Stationsträger um einen drehbaren Träger, wie insbesondere um ein Blasrad. Die einzelnen Umformungsstationen sind bevorzugt an einem Außenumfang dieses drehbaren Trägers angeordnet. Damit werden die Umformungsstationen im Arbeitsbetrieb entlang eines kreisförmigen Pfades bewegt.

Vorteilhaft weist die Vorrichtung eine Antriebseinrichtung zum Bewegen des Stationsträgers auf und diese Antriebseinrichtung ermöglicht dabei bevorzugt sowohl eine kontinuierliche Bewegung des Stationsträgers als auch eine getaktete Bewegung des Stationsträgers, welche damit zwischen Bewegungen jeweils Ruhephasen aufweist. Vorteilhaft ist dabei diese Bewegungsart in Abhängigkeit von einem Betriebsmodus einstellbar. In einem Arbeitsbetrieb wird der Stationsträger bevorzugt kontinuierlich bewegt und in einem Wechselbetrieb bevorzugt getaktet. Dabei kann eine Bewegung dieses Stationsträgers auch auf Bewegungen der Wechseleinrichtungen abgestimmt sein. Vorteilhaft handelt es sich beim dem Stationsträger um ein Blasrad.

Durch die erfindungsgemäße Vorgehensweise wird ein vollautomatischer Wechselvorgang, insbesondere mittels eines Industrieroboters, ermöglicht. Vorteilhaft kann dabei die Blasformeinrichtung, insbesondere in einem Wechselbetrieb, vollautomatisch verriegelt werden, bzw. die einzelnen Elemente der Blasformeinrichtungen aneinander befestigt werden. Die Wechseleinrichtung ist damit bevorzugt geeignet, die vollständige Blasformeinrichtung, das heißt deren mindestens drei Bestandteile im Verbund zu greifen bzw. zu entnehmen. Vorteilhaft kann nach dem Greifen der Blasformeinrichtung eine entsprechende Formverriegelung deaktiviert werden. In einem weiteren Schritt kann die Wechseleinrichtung den Formverbund in einer Lagervorrichtung, wie einem Magazin, absetzen. In der Folge kann die Wechseleinrichtung einen neuen Formverbund bzw. eine neue Blasformeinrichtung in einen Blasformträger einsetzen und (bevorzugt) die neue Blasformeinrichtung mit dem Blasformträger verriegeln.

Anschließend kann der Stationsträger um eine Position weitergefahren werden, um eine weitere Blasformeinrichtung auszuwechseln. Damit kann insbesondere ein vollautomatischer Vorgang durchgeführt werden, bei dem kein Benutzer notwendig ist.

Bei einer weiteren vorteilhaften Ausführungsform weist die Vorrichtung ein Gehäuse auf, welche zumindest den Stationsträger in dessen Umfangsrichtung umgibt. Dabei kann im Prinzip die vollständige Blasformeinrichtung und/oder die Wechseleinrichtung innerhalb eines Gehäuses angeordnet sein, wobei dieses Gehäuse auch eine Schutzfunktion aufweisen kann.

Die Wechseleinrichtung wird bevorzugt direkt in die Maschine integriert und kann beispielsweise an einem Grundgestell angebaut sein. Bei einer weiteren vorteilhaften Ausführungsform ist die Wechseleinrichtung in ihrer Gesamtheit in einem von dem Gehäuse umgebenden Raum verlagerbar. In diesem Falle ist es möglich, dass in einem Betriebszustand die Wechseleinrichtung vollständig in die Maschine integriert ist und so beispielsweise von außen noch nicht einmal sichtbar ist und insbesondere den Betrieb der Umformungseinrichtung nicht stört. Dabei ist es möglich, dass eine Verkleidung des Gehäuses auch als Schutzeinrichtung für die Wechseleinrichtung bzw. den Roboter dient. Im Arbeitsbetrieb ist damit bevorzugt die besagte Wechseleinrichtung innerhalb des Gehäuses angeordnet.

Bei einer weiteren vorteilhaften Ausführungsform weist die Wechseleinrichtung eine erste Steuerungseinrichtung zum Steuern einer Entfernungsbewegung der Blasformeinrichtungen und/oder einer Zuführ- bzw. Anordnungsbewegung zum Anordnen der Blasformeinrichtungen an den Blasformträgern auf und die Vorrichtung weist bevorzugt auch eine zweite Steuerungseinrichtung zum Steuern eines Blasformvorgangs auf, wobei die erste Steuerungseinrichtung und die zweite Steuerungseinrichtung wenigstens teilweise und/oder wenigstens zeitweise zusammenwirken. Insbesondere wirken diese beiden Steuerungseinrichtungen während eines Blasformwechselvorgangs zusammen. So können während eines Wechselvorgangs die gleichen Bewegungen, die auch im Arbeitsbetrieb nötig sind, auch für den Wechselvorgang verwendet werden, wie beispielsweise die Transportbewegung der Umformungsstationen, das Öffnen und Schließen der Blasformträger und dergleichen.

Im Wechselvorgang können die Blasformträger ebenfalls geöffnet werden, um die Blasformeinrichtung entnehmen zu können. So kann beispielsweise die zweite Steuerungseinrichtung eine Öffnung der Blasformträger bewirken und in Abhängigkeit hiervon kann die erste Steuerungseinrichtung ein Herausnehmen der Blasformeinrichtungen bewirken. Auch hierdurch wird ein vollautomatischer Wechsel der Blasformen möglich. Damit interagiert bevorzugt die Steuerung der Wechseleinrichtung mit der Steuerungseinrichtung der Umformungsmaschine bzw. Blasmaschine.

Bei einer weiteren bevorzugten Ausführungsform weist die Wechseleinrichtung eine erste Steuerungseinrichtung zum Steuern einer Entfernungsbewegung der Blasformeinrichtungen und/oder der Anordnungsbewegung zum Anordnen der Blasformeinrichtung an den Blasformträgern auf und die Vorrichtung weist auch eine zweite Steuerungseinrichtung zum Steuern eines Blasvorgangs auf, wobei eine Steuerungseinrichtung in die andere Steuerungseinrichtung integriert ist.

insbesondere ist dabei die Steuerung der Wechseleinrichtung in eine Steuerung der Vorrichtung bzw. Blasmaschine integriert. So wäre es möglich, dass die Wechseleinrichtung als Modul ausgeführt ist, welches auch steuerungstechnisch, beispielsweise nach einem Zusammenstecken oder steuerungstechnischen Verbinden, in die Blasformmaschine integriert werden kann. Auch wäre es so möglich, dass eine Wechseleinrichtung an bereits bestehende Vorrichtungen nachgerüstet wird. Diese Steuerungseinrichtungen können dabei derart gestaltet sein, dass ein Schutzbereich während eines Wechselbetriebs erweitert wird. In einem Arbeitsbetrieb kann sich die Wechseleinrichtung in einer Ruheposition befinden, in der von ihr keine Gefahren ausgehen, und in der sie auch eine Bedienung der Maschine nicht verhindert.

Im Wechselbetrieb wird auch die Wechseleinrichtung aktiv, sodass diejenigen Bereiche, deren Betreten für den Benutzer unter Umständen gefährlich sein könnte, erweitert werden müssen. So ist es denkbar, dass im Rahmen des Wechselbetriebes geänderte Schutzbereiche auch für den Benutzer gesperrt oder zumindest erkennbar gemacht werden.

Dabei wäre es möglich, dass im Rahmen des Wechselbetriebes zusätzliche Schutzelemente betätigt werden, wodurch die Sicherheit des Bedieners erhöht werden kann.

Bei einer weiteren vorteilhaften Ausführungsform weist die Wechseleinrichtung wenigstens eine Greifeinrichtung zum Greifen der Blasformeinrichtungen auf. Dabei kann es sich um eine Greifeinrichtung handeln, welche die Blasformeinrichtung in ihrer Gesamtheit greift. Dabei wäre es möglich, dass an der Greifeinrichtung benötigte Medien und/oder elektrische Signale durch Bereiche der Wechseleinrichtungen, wie beispielsweise Achsen oder Schwenkarme, geführt werden. Auch wäre es möglich, dass derartige Verbindungen über Drehdurchführungen, beispielsweise an den Achsen der Wechseleinrichtungen geführt werden.

Bei einer weiteren vorteilhaften Ausführungsform weist die Wechseleinrichtung wenigstens eine Erfassungseinrichtung zum Erfassen wenigstens einer auf ein Element der Wechseleinrichtung wirkenden Kraft auf. So können insbesondere äußere Kräfte, die beispielsweise auf einen Wechselarm, der die Blasformeinrichtungen entnimmt, wirken. So kann insbesondere die oben erwähnte Steuerungseinrichtung derart ausgeführt sein, dass sie auf äußere Kräfte reagieren kann, beispielsweise während definierter Operationen wie einem Ablegen oder Aufnehmen einer Blasformeinrichtung, die Wechseleinrichtung von einer Soll-Position abweichen kann (Softfloat). Allgemein handelt es sich um eine Erfassungseinrichtung, welche auf physikalische Einwirkungen reagieren kann bzw. derartige Einwirkungen erfassen kann, wie etwa ein Drehmoment, Kräfte, Impulse oder dergleichen. Auf diese Weise ist eine schnelle Reaktion der Wechseleinrichtung möglich.

Bevorzugt bewegt sich jedoch die Wechseleinrichtung innerhalb eines begrenzten Arbeitsbereiches. Dies bedeutet, dass insbesondere auch die Entnahme- und Zuführbewegung für die Blasformeinrichtungen in einem begrenzten Arbeitsbereich stattfindet. In Reaktion auf die oben erwähnten äußeren Kräfte kann eine Position von diesem Arbeitsbereich abweichen. Ansonsten wird jedoch bevorzugt dieser definierte Arbeitsbereich eingehalten, insbesondere während eines Formenwechsels.

Dabei ist es vorteilhaft möglich, dass der Arbeitsbereich der Wechseleinrichtung sicherheitstechnisch und insbesondere mechanisch begrenzt wird. Eine derartige Begrenzung wäre durch unterschiedliche Maßnahmen möglich, etwa durch Lichtschranken, welche eine falsche bzw. zu weit gehende Bewegung der Wechseleinrichtung erfassen und in der Folge entweder eine Rückführung oder einen Notstopp der Wechseleinrichtung bewirken. Daneben wäre jedoch auch eine Begrenzung des Arbeitsbereiches durch mechanische Elemente, wie beispielsweise Anschläge, möglich.

Daneben ist es auch bevorzugt möglich, dass ein Arbeitsbereich der Wechseleinrichtung sicherheitstechnisch und elektrisch bzw. auch steuerungsseitig überprüft wird. Dabei ist es insbesondere möglich, dass dieser Arbeitsbereich abweichend von einem maximalen möglichen Arbeitsbereich (weiter) eingeschränkt wird.

Bei einer weiteren vorteilhaften Ausführungsform weist die Wechseleinrichtung eine serielle und/oder parallele Kinematik mit wenigstens drei Bewegungsachsen auf. Vorteilhaft weist die Wechseleinrichtung eine serielle und/oder parallele Kinematik mit mehr als drei Bewegungsachsen auf. Auf diese Weise wird eine sehr hohe Bewegungsfreiheit der Wechseleinrichtung bzw. eines Greifelements der Wechseleinrichtung ermöglicht. Die Blasformeinrichtungen können daher in Abhängigkeit von den tatsächlichen Gegebenheiten in unterschiedlicher Weise auch von ihren Blasformträgern entnommen bzw. diesen zugeführt werden.

Dabei ist es möglich, dass die Vorrichtung eine Bedieneinrichtung aufweist, um die Wechseleinrichtung bzw. den Greifarm zu steuern. Dabei kann es sich beispielsweise um ein Handbediengerät handeln. Es wäre jedoch auch möglich, dass eine Steuerung der Wechseleinrichtung über Geräte wie beispielsweise Smartphones steuerbar ist.

Eine Steuerung durch ein derartiges Bediengerät ist dabei insbesondere im Einrichtbetrieb, das heißt beim Zuführen von neuen Blasformeinrichtungen vorteilhaft.

Die vorliegende Erfindung ist weiterhin auf ein Verfahren zum Betreiben einer Umformungseinrichtung zum Umformen von Kunststoffvorformlingen zu Kunststoffbehältnissen gerichtet. Dabei werden in einem Arbeitsbetrieb der Vorrichtung die Kunststoffvorformlinge mittels einer Vielzahl von Umformungsstationen entlang eines vorgegebenen Transportpfades transportiert und durch Beaufschlagung mit einem fließfähigen und insbesondere gasförmigen Medium zu den Kunststoffbehältnissen expandiert. Weiterhin werden zum Expandieren der Kunststoffvorformlinge Blasformeinrichtungen verwendet, in deren Inneren die Kunststoffvorformlinge zu den Kunststoffbehältnissen expandiert werden. Dabei wird in einem Wechselbetrieb zumindest eine der Blasformeinrichtungen der Vorrichtung entnommen und/oder eine der Blasformeinrichtungen an einen Blasformträger der Vorrichtung angeordnet.

Vorteilhaft wird zum Wechseln der Blasformeinrichtungen eine an der Vorrichtung angeordnete Wechseleinrichtung verwendet. Es wird daher auch verfahrensseitig vorgeschlagen, dass derartige Blasformwechsel mittels einem an der Vorrichtung angeordneten bzw. in diese integrierten Wechselroboters durchgeführt werden.

Bei einem weiteren bevorzugten Verfahren werden die Umformungsstationen in dem Arbeitsbetrieb entlang eines umlaufenden Transportpfades transportiert und in dem Wechselbetrieb werden die Blasformeinrichtungen in einer vorgegebenen festgelegten Position der jeweiligen Umformungsstation, deren Blasformeinrichtung entnommen werden soll, bezüglich des umlaufenden Transportpfades entnommen. Es wird daher vorgeschlagen, dass im Arbeitsbetrieb die Umformungsstationen umlaufen, wie dies an sich im Stand der Technik bekannt ist. Für den einzelnen Wechselvorgang wird jedoch vorgeschlagen, dass dieser an wenigstens einer genau bestimmten Station erfolgt, die insbesondere auch in einem Wirkungsbereich der Wechseleinrichtung liegt. Mit anderen Worten ist vorteilhaft die Entnahmeposition an einem Blasrad immer identisch. Dabei ist es möglich, dass sich die Wechseleinrichtung während der Produktion oder des Arbeitsbetriebes derart ausrichtet, dass sie innerhalb eines Blasmaschinenschutzbereiches bzw. Gehäuses angeordnet werden kann.

Hinsichtlich der Steuerungseinrichtung ist es denkbar, dass diese über zwei unabhängige Koordinatensysteme den Bewegungsablauf der Wechseleinrichtung bzw. des Roboters steuert. Bevorzugt ist dabei ein Koordinatensystem an der Entnahme- bzw. Eingabeposition der Blasformeinrichtung zu der Umformungsstation bzw. den Blasformträgern platziert. Ein weiteres Koordinatensystem kann im Bereich einer Aufnahmeeinrichtung bzw. eines Magazins befindlich sein, in welchem die Blasformeinrichtungen abgelegt werden.

Es ist aber möglich, dass die Positionen der Aufnahmestellen der Blasformeinrichtungen an der Aufnahmeeinrichtung bzw. dem Magazin relativ zu dessen Koordinatensystem unabhängig von der Aufnahmeeinrichtung unverändert bleiben und/oder die Positionen der Aufnahmestellen sich in äquidistanten Abständen zu diesem Koordinatensystem befinden. Dabei ist es möglich, dass eine Anzeigeeinrichtung, wie insbesondere ein Eingabebildschirm der Wechseleinrichtung vorgesehen ist. Über diesen können bestimmte Werte der Koordinatensysteme, insbesondere die X-, Y- und Z-Werte der Koordinatensysteme verändert werden. Daneben kann bevorzugt an der Wechseleinrichtung eine weitere Eingabeeinrichtung wie ein Eingabebildschirm angeordnet sein, der bevorzugt mit einer Eingabeeinrichtung der Blasformmaschine interagiert.

Zum Entnehmen und Zuführen der Blasformeinrichtungen sind mehrere Möglichkeiten denkbar.

So wäre es denkbar, dass zunächst alle Blasformeinrichtungen aus den einzelnen Formträgern, das heißt den einzelnen Umformungsstationen entnommen werden und in ein leeres Magazin bzw. Lagersystem eingegeben werden. Anschließend wird dieses Lagersystem mit den Altformen durch ein volles Lagersystem mit neuen einzuwechselnden Blasformeinrichtungen ersetzt. Anschließend werden alle Neuformen in die Blasformträger eingegeben. Der Wechsel der Lagersysteme kann dabei beispielsweise mittels Hubwagen oder mittels Drehtischen erfolgen, etwa in der Art eines Palettenwechsels bei Werkzeugmaschinen. In diesem Falle wird der Blasformträger für einen vollständigen Wechsel vorteilhaft zwei vollständige Umdrehungen durchführen.

Bei einem weiteren möglichen Wechselvorgang enthält ein Magazin eine Leerstelle. Dabei wird zunächst eine Neuform aus einem Formplatz in diese Leerstelle gestellt. Anschließend wird eine Altform aus dem Formträger in den besagten Formplatz gestellt. In einem weiteren Schritt wird eine Neuform aus dem Magazin in den Formträger übergeben. Anschließend wird eine zweite Neuform in die Leerstelle gesetzt und so weiter, bis der gesamte Wechsel vollzogen ist. Durch das Zwischenlagern in einer Leerstelle wird gewährleistet, dass eine bestimmte Blasformeinrichtung wieder an einem bestimmten Lagerplatz bzw. einem bestimmten Blasformträger übergeben wird. Vorteilhaft befindet sich dabei die besagte Leerstelle räumlich zwischen dem Blasformträger und dem Lagersystem und bevorzugt auf bzw. in dem Lagersystem selbst.

Vorteilhaft erfolgt die Entnahme der Blasformeinrichtung und/oder die Zuführung neuer Blasformeinrichtungen in einem Taktbetrieb. Dies bedeutet, dass der einzelne Wechsel der Blasformeinrichtung erfolgt, während die Umformungsstation stillsteht. Dabei kann die Wechseleinrichtung eine bestimmte Blasformeinrichtung in einem Magazin ablegen, und währenddessen kann die Umformungseinrichtung selbst um eine Station weiter fahren, das heißt das Blasrad dreht sich um eine Position weiter. Zum Einsetzen und Entnehmen der Blasformeinrichtungen wird vorteilhaft eine relativ zu dem Transportpfad radiale Richtung verwendet. Wie oben erwähnt, ist es auch möglich, die Blasformeinrichtung in einer Zwischenstation zu parken bzw. abzustellen. Hierfür kann bevorzugt eine vertikale Bewegung verwendet werden.

Verfahrensseitig ist es möglich, dass die Greifeinrichtung der Wechseleinrichtung die Blasformeinrichtung formschlüssig greift, um diese zu transportieren bzw. aus der Vorrichtung zu entnehmen. Vorteilhaft greift die Greifeinrichtung der Wechseleinrichtung kraftschlüssig in die Blasformeinrichtung ein.

Bei einer weiteren vorteilhaften Ausführungsform erfolgt die Entnahme und/oder das Ablegen der Blasformeinrichtung weg- und/oder kraftgesteuert und bevorzugt sowohl weg- als auch kraftgesteuert.

Im Rahmen der Steuerung ist es möglich, dass die Wechseleinrichtung wenigstens einen definierten Referenzpunkt an der Umformungsstation bzw. der Aufnahme- oder den Blasformträgern anfährt und/oder bevorzugt auch wenigstens einen definierten Referenzpunkt an einem Ablageort, wie beispielsweise einem Magazin. Auf diese Weise können die besagten Punkte in die Steuerung der Wechseleinrichtung übertragen werden, wodurch die exakten Lagen der Formaufnahme bzw. des Blasformträgers und auch des Magazins bzw. der Aufbewahrungseinrichtung ermittelt werden können. Bevorzugt ist es dabei möglich, dass die besagten Referenzpunkte nach jedem Austausch einer Magazinvorrichtung angefahren werden oder auch im Falle von Störungen, wie beispielsweise Spannungsausfällen, angefahren werden, um so in die Steuerung übertragen zu werden.

Dabei ist es möglich, dass die so ermittelten Referenzpunkte abgespeichert werden und/oder mit Referenzpunkten, welche in der Steuerung bzw. einer Speicherungseinrichtung der Steuerung hinterlegt sind, abgeglichen werden. Falls zwischen dem ermittelten Referenzpunkt und dem bereits abgespeicherten Referenzpunkt eine Abweichung auftritt, die insbesondere über ein vorbestimmtes Maß hinaus geht, kann eine Fehlermeldung bzw. ein Hinweis erzeugt werden.

Bei einer weiteren vorteilhaften Ausführungsform weist die Wechseleinrichtung eine Bildaufnahmeeinrichtung, wie etwa eine Kamera oder dergleichen, auf. Mithilfe dieser Kameraeinrichtung ist es möglich, die genauen Aufnahme- bzw. Ablagepunkte für die Blasformeinrichtungen zu erfassen.

In diesem Zusammenhang ist es denkbar, dass die Blasformeinrichtungen und/oder der Blasformträger und/oder die Magazineinrichtung jeweils eine Kennzeichnung enthalten, um eine Zuordnung zwischen den Blasformeinrichtungen und der jeweiligen Blasstation zu gewährleisten. Auf diese Weise kann sichergestellt werden, dass eine bestimmte Blasformeinrichtung, die von einer bestimmten Umformungsstation entnommen wurde, bei einem weiteren Wechsel auch wieder der gleichen Umformungsstation zugeordnet wird. So wäre es möglich, dass jedem Aufnahmemagazin eine einzelne Kennung zugeordnet ist.

Diese Kennzeichnungen können dabei beispielsweise Stichcodes, QR-Codes, RFID-Tags und dergleichen sein. Vorteilhaft ist es möglich, dass diese Kennzeichnung berührungslos abgefragt wird. Vorteilhaft wird die Kennzeichnung bzw. ein für diese Kennzeichnung charakteristischer Wert in die Steuerungseinrichtung der Maschine übernommen.

Bei einem weiteren Verfahren ist es auch denkbar, dass die jeweiligen Kennzeichnungen nach jedem Wechsel der Magazineinrichtung oder auch bei Ausfällen der Maschine erneut eingelesen werden. Auf diese Weise kann eine sichere Zuordnung auch unter Ausnahmebedingungen gewährleistet werden.

Im Folgenden wird noch eine Aufnahmeeinrichtung bzw. ein Magazin für die Blasformeinrichtungen beschrieben. Diese Aufnahmeeinrichtung kann für einen Formwechsel an einer geeigneten Position angeordnet werden, etwa neben der Umformungseinrichtung. Dabei kann die Magazin- bzw. Aufnahmevorrichtung Einführbereiche aufweisen, über welche die Blasformeinrichtungen in das Magazin bzw. die Aufnahmeeinrichtungen abgelegt werden können. Diese Einführbereiche können dabei konisch ausgeführt sein, um ein sicheres Einführen der Blasformeinrichtungen zu ermöglichen. Vorteilhaft wird dabei die Blasformeinrichtung bzw. das Formenpaket im Wesentlichen vertikal in das Magazin eingeführt. Besonders bevorzugt kann die Blasformeinrichtung in zylindrischen Öffnungen des Magazins bzw. der Aufnahmeeinrichtung abgelegt werden. Das Magazin selbst kann - insbesondere formschlüssig - in dieser Aufnahmeeinrichtung angeordnet sein.

Bei einer bevorzugten Ausführungsform kann diese Magazinvorrichtung dabei elastische Elemente, insbesondere im Bereich der zylindrischen Öffnungen, zum Einführen der Blasformeinrichtungen aufweisen, um Toleranzen ausgleichen zu können.

Bei einer weiteren vorteilhaften Ausführungsform wäre es auch möglich, dass die Magazin- bzw. die Aufnahmeeinrichtung und/oder die Blasformeinrichtung in den Bereichen, in denen die Blasformeinrichtung mit den zylindrischen Öffnungen der Magazinvorrichtung in Kontakt tritt, mit Einführbereichen und insbesondere mit kegeligen Einführbereichen ausgestattet ist.

Bei einer weiteren vorteilhaften Ausführungsform weist, wie oben erwähnt, die Magazin- bzw. Aufnahmevorrichtung eine Vielzahl von Öffnungen zum Aufnehmen der einzelnen Blasformeinrichtungen auf. Dabei sind diese Öffnungen vorteilhaft zylindrisch ausgebildet. Besonders bevorzugt sind diese Öffnungen in den Magazinvorrichtungen zumindest bereichsweise aus Kunststoff ausgeführt.

Dabei ist es möglich, dass diese Öffnungen in mehreren Reihen angeordnet sind und beispielsweise zwei benachbarte Reihen gegenüber einander versetzt sind. Auf diese Weise kann die Packungsdichte der Blasformeinrichtungen erhöht werden.

Bei einer weiteren vorteilhaften Ausführungsform ist die Position der Blasformeinrichtung innerhalb der Aufnahmeeinrichtung niedriger als die Position der Blasformeinrichtung in dem Blasformträger. Auf diese Weise wird bei der Demontage der Blasformeinrichtung diese nach unten abgesenkt.

Bei einer weiteren vorteilhaften Ausführungsform weist das Magazin eine mehreckige und bevorzugt rechteckige Außenkontur auf, wobei bevorzugt die Längsseite dieser Außenkontur im Wesentlichen senkrecht zu einer gedachten radialen Verbindungslinie zwischen einem Teilkreismittelpunkt und den Blasformträgern angeordnet ist. Auf diese Weise kann die Magazineinrichtung von der Wechseleinrichtung bzw. einem Arm der Wechseleinrichtung sehr leicht erreicht werden.

Im Folgenden wird die Ausgestaltung der Blasformeinrichtung beschrieben. So ist es denkbar, dass zum Entriegeln der Blasformeinrichtungen an einem Formträger oder auch einer Formträgerschale bzw. auch beim Entriegeln eines Bodenteils der Blasformeinrichtung die Anordnung, das heißt insbesondere die Seitenteile und das Bodenteil, mechanisch miteinander verbunden werden. Es käme jedoch auch eine magnetische Verbindung in Betracht.

Vorteilhaft ist ein derartiger Fixiermechanismus, der die einzelnen Blasformteile miteinander verbindet, so ausgeführt, dass dieser nur eine Kraft in einer Zugrichtung aufweist bzw. ausführt und radial hierzu eine bestimmte Nachgiebigkeit aufweist, um Toleranzen auszugleichen. Vorteilhaft kann an den Teilen der Blasformeinrichtungen, wie etwa den Blasformhälften, ein Vorsprung, ein Nocken oder dergleichen vorgesehen sein, welcher von einem Element der Greifeinrichtung hintergriffen werden kann oder in welchen die Greifeinrichtung einfahren kann.

Bei einer weiteren vorteilhaften Ausführungsform sind die in Verbindung mit einer Greifeinrichtung stehenden Vorsprünge oder Nocken vorteilhaft radial innerhalb des durch einen Behältnismittelpunkt beschriebenen Teilkreises angeordnet. Auf diese Weise kann erreicht werden, dass diese Nocken auch im Arbeitsbetrieb nicht mit Klammern, beispielsweise eines Einlauf- und Auslaufstern in Kontakt treten können.

Bei einer weiteren vorteilhaften Ausführungsform wäre es auch möglich, dass zwischen den beiden Formschalen und einer Bodenform der Blasformeinrichtung eine formschlüssige Verbindung vorliegt, welche ein Verdrehen der Bodenform relativ zu den Seitenteilen bzw. Formschalen verhindert. Daneben wäre es auch möglich, dass die Bodenform vor dem Wechselvorgang mechanisch mit den Formhälften verbunden wird.

Zur Vereinfachung eines Belade- und Entladevorgangs wäre es möglich, dass eine Rotationsachse der Blasformeinrichtung während des Be- und Entladens (der Kunststoffbehältnisse) im Wesentlichen parallel zur Achse des Formträgers bzw. auch zu einer Drehachse des Blasrades verläuft.

In einer weiteren vorteilhaften Ausführungsform wäre es auch möglich, dass ein Schutzbereich der Blasmaschine während einer Produktion automatisch von einem Ablagebereich der Blasformen bzw. Blasformeinrichtungen getrennt wird. Eine derartige Trennung kann dabei automatisch bei einem Beginn bzw. Starten eines Formwechselvorgangs - insbesondere automatisch - durchgeführt werden.

Dabei können die Schutzbereiche so geändert werden, dass ein Maschinenbediener während der Produktion der Vorrichtung bzw. während des Arbeitsbetriebs einen Bereich der Formenablage betreten kann. So wäre es denkbar, dass beispielsweise eine elektromechanische Einheit die Position einer Umformungsstation relativ zu der Wechseleinrichtung jeweils nach der Positionierung des Blasrades bevorzugt form- und/oder kraftschlüssig sicherstellt.

Wie oben bereits erwähnt, kann es vorteilhaft sein, wenn die Öffnungsbewegungen des Blasformträgers und des Bodens in einer Wechselposition für die Blasformeinrichtung von der im Betrieb abweicht. Dies kann beispielsweise bei einer nicht gekoppelten Formträgeransteuerung vorteilhaft sein. Auch wäre es möglich, dass ein relativ zu der in der Blasformeinrichtungswechselposition jeweils vor- bzw. nacheilenden Blasformträger der Nachbarstation ebenfalls bereichsweise weggeschwenkt wird, um für die in der Wechselposition befindliche Umformungsstation einen größeren Öffnungswinkel zu ermöglichen.

Weiterhin wäre es möglich, dass ein Fixiermechanismus für die Formschalen und die Bodenformen während eines Spannablaufs eine progressive Kennlinie aufweist. Zu Beginn eines derartigen Spannablaufs kann ein großer Hub mit einer geringen Kraft erfolgen, um möglichst große Abstände beim Einziehen überbrücken zu können. Gegen Ende des Spannablaufs wird bevorzugt eine große Kraft bei nur geringem Hub durchgeführt.

Bei einem weiteren vorteilhaften Verfahren befindet sich die Wechselposition der Blasstation und/oder das Magazin und/oder eine etwaige Zwischenposition in der die Blasformeinrichtungen zwischenzeitlich positioniert werde, in einem vorgegebenen Umfangsbereich eines Wirkkreises der Wechseleinrichtung, vorzugsweise in einem Bereich von 270° des Wirkkreises, bevorzugt in einem Bereich von 220° des Wirkkreises und besonders bevorzugt in einem Bereich von 180° des Wirkkreises.

Bei einem weiteren vorteilhaften Verfahren führt die Wechseleinrichtung bzw. der Wechselroboter beim Entnehmen und/oder Anordnen der Blasformeinrichtung von den Stationen bzw. an den Blasformträgern eine relativ zu dem Teilkreis der Vorrichtung radiale Bewegung auf. Dabei kann es sich um eine rein radiale Bewegung handeln, es wäre jedoch auch denkbar, dass es sich um eine Bewegung mit einer radialen Komponente handelt.

Bei einem weiteren vorteilhaften Verfahren führt die Wechseleinrichtung bzw. der Wechselroboter beim Entnehmen und/oder Anordnen der Blasformeinrichtung von den Stationen bzw. an den Blasformträgern eine im Wesentlichen vertikale Bewegung aus. Unter im Wesentlichen wird dabei verstanden, dass die Bewegungsrichtung von der exakt vertikalen Richtung um nicht mehr als 20° bevorzugt um nicht mehr als 10° und besonders bevorzugt um nicht mehr als 5° abweicht.

Weitere Vorteile und Ausführungsformen ergeben sich aus den beigefügten Zeichnungen:
Darin zeigen:
- Fig. 1: eine schematische Darstellung einer Anlage zum Herstellen von Getränkebehältnissen;
- Fig. 2: eine Detailansicht eines Roboterarms;
- Fig. 3: die Darstellung aus Figur 2 mit abgenommener Greifeinrichtung;
- Fig. 4: eine Darstellung einer Wechseleinrichtung mit zwei Greifelementen;
- Fig. 5: eine weitere Darstellung einer erfindungsgemäßen Anlage;
- Fig. 6: eine Darstellung einer Wechseleinrichtung mit einem Magazin;
- Fig. 7: eine Detaildarstellung einer Erwärmungseinrichtung zum Erwärmen von Kunststoffvorformlingen;
- Fig. 8: zwei Darstellungen zum Auswechseln von Heizdornen;
- Fig. 9: zwei Darstellungen zum Auswechseln von Abschirmelementen;
- Fig. 10: eine Darstellung einer Greifeinrichtung;
- Fig. 11: die Greifeinrichtung aus Figur 10 mit einer weiteren Perspektive;
- Fig. 12 - 14: drei Darstellungen einer Greifeinrichtung;
- Fig. 15: eine Darstellung zur Veranschaulichung des Wechselvorgangs der Erwärmungsvorrichtung;
- Fig. 16: eine Darstellung einer Magazineinrichtung;
- Fig. 17: eine Darstellung zur Veranschaulichung eines Wechselvorgangs;
- Fig. 18: eine Darstellung einer weiteren vorteilhaften Anordnung; und
- Fig. 19: eine Darstellung einer weiteren vorteilhaften Anordnung.

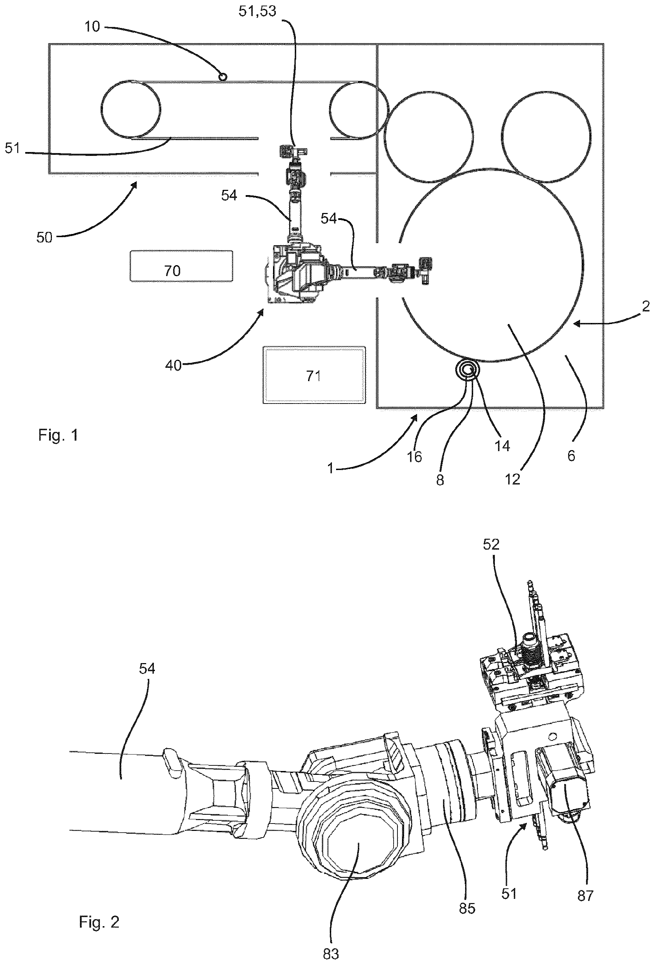

Figur 1 zeigt eine Darstellung einer erfindungsgemäßen Anlage 100 zum Herstellen von Kunststoffbehältnissen. Diese Anlage weist dabei eine Erwärmungseinrichtung 50 auf, welche wiederum eine Transporteinrichtung 49 zum Transportieren der Kunststoffvorformlinge 10 aufweist. Diese Transporteinrichtung kann dabei eine umlaufende Transportkette sein, an der eine Vielzahl von Haltelementen zum Halten der Kunststoffvorformlinge, wie beispielsweise Haltedornen (nicht gezeigt), angeordnet ist.

Das Bezugszeichen 1 kennzeichnet eine Umformungseinrichtung zum Umformen der Kunststoffvorformlinge zu den Kunststoffbehältnissen. Bei dieser Umformungseinrichtung handelt es sich insbesondere um eine sogenannte Streckblasmaschine. Damit weist bevorzugt diese Umformungseinrichtung auch eine Beaufschlagungseinrichtung zum Beaufschlagen der Kunststoffvorformlinge mit einem gasförmigen Medium und insbesondere mit Blasluft auf. Weiterhin weist die Vorrichtung bevorzugt auch eine Reckstange auf, um die Kunststoffvorformlinge in ihrer Längsrichtung zu dehnen.

Das Bezugszeichen 2 bezieht sich auf eine Transporteinrichtung zum Transportieren der Kunststoffvorformlinge. Diese Transporteinrichtung weist dabei einen Stationsträger 12 auf, an dem eine Vielzahl von Umformungsstationen 8 angeordnet ist. Bei diesem Stationsträger handelt es sich hier um ein sogenanntes Blasrad, an dem die einzelnen Umformungsstationen 8 insbesondere an dessen Außenumfang angeordnet sind. Die einzelnen Umformungsstationen 8 weisen dabei jeweils Blasformträger 16 auf, an denen wiederum Blasformeinrichtungen 14 angeordnet sind (nur schematisch gezeigt).

Das Bezugszeichen 40 kennzeichnet eine Wechseleinrichtung, welche zum Wechseln der Blasformeinrichtungen 14 dient. Diese Wechseleinrichtung 40 weist hier einen Wechselarm 54 auf, der jedoch in Figur 1 in zwei unterschiedlichen Stellungen dargestellt ist. In der hier horizontal verlaufenden Stellung ist der Wechselarm geeignet, um die Blasformeinrichtungen auszuwechseln. In der in Figur 1 gezeigten vertikalen Darstellung ist der Wechselarm geeignet, um Elemente der Erwärmungseinrichtung, wie beispielsweise die Heizdorne, einzuwechseln.

Das Bezugszeichen 70 kennzeichnet eine erste Magazineinrichtung, in welche Elemente der Erwärmungseinrichtung abgelegt werden können. Das Bezugszeichen 71 kennzeichnet eine zweite Magazineinrichtung, in welche Elemente der Umformungseinrichtung, wie insbesondere die Blasformeinrichtungen, abgelegt werden können.

Bei der in Figur 1 gezeigten Ausführungsform wird damit die Wechseleinrichtung, die für den Wechsel der Blasformen in der Vorrichtung 1 eingesetzt wird, auch für den Wechseln von beispielsweise Heizdornen und Abschirmplatten in der Erwärmungseinrichtung 50 genutzt. Auf diese Weise kann die vorhandene Wechseleinrichtung weiter genutzt und besser ausgelastet werden.

Damit übernimmt hier bevorzugt eine Wechseleinrichtung 40 den Wechsel der Garnituren komplett.

Die Wechseleinrichtung 40 ist hier zwischen der Erwärmungseinrichtung 50 und der Umformungseinrichtung 1 fest angeordnet und kann mit dem Wechselarm 54 beide Maschinenmodule erreichen. Bevorzugt ist der Wechselarm hier mit einem wechselbaren Behandlungskopf 51, 53 ausgestattet, der es ermöglicht, die Handlingsvorrichtung bzw. das Greifelement selbstständig zu wechseln und abzulegen. Bei dieser Ausführungsform ist damit hier mindestens ein Behandlungskopf für die Erwärmungseinrichtung und mindestens ein Behandlungskopf für die Umformungseinrichtung vorgesehen.

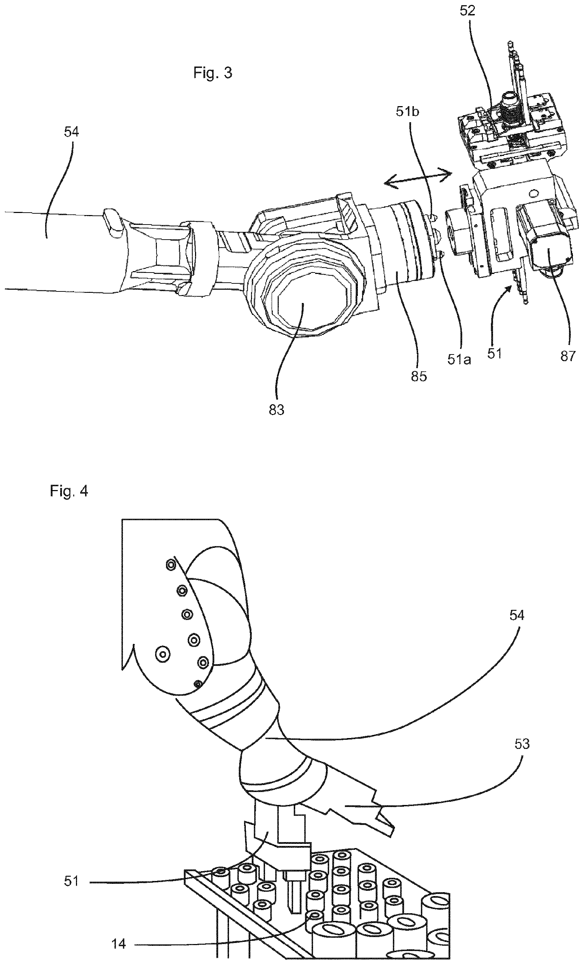

Figuren 2 und 3 zeigen ein Beispiel für einen derartigen wechselbaren Behandlungskopf. Dabei ist an dem Wechselarm 54 hier über ein Schwenkgelenk 83 ein Träger 85 angeordnet und an diesem Träger 85 ist wiederum auswechselbar der Behandlungskopf 51 angeordnet. Das Bezugszeichen 87 kennzeichnet einen Motor, mit dem eine Dreh- bzw. Schwenkbewegung des Behandlungskopfes 51 bzw. 53 erreicht werde kann. Wie in Figur 3 gezeigt, kann der Behandlungskopf bzw. das Wechselelement 51 von dem Träger 85 und damit auch von dem Arm 54 gelöst werden. Das Bezugszeichen 52 kennzeichnet eine Greifeinrichtung.

Bei der in Fig. 2 gezeigten Darstellung handelt es sich um eine Behandlungseinrichtung bzw. ein Handlingselement, die zum Wechseln von Elementen der Erwärmungseinrichtung 50 dient, wie beispielsweise der Haltedorne oder der Abschirmelemente.

Weiterhin wäre es auch möglich, dass derartige Behandlungsköpfe beispielsweise auch einschließlich ihrer Medienkupplungen für Pneumatik oder Hydraulik oder auch für die Steuerung und Leistungsversorgung von dem Wechselarm selbstständig abgelegt und angekuppelt werden können.

Bei der in Fig. 3 dargestellten Situation ist der Behandlungskopf bzw. das Wechselelement 51 von seinem Träger abgenommen. Die Bezugszeichen 51a und 51b beziehen sich auf Verbindungselemente, über welche beispielsweise eine hydraulische oder pneumatische oder aber auch eine elektrische Verbindung hergestellt werden kann. Dabei sind diese Verbindungselemente 51a,b bevorzugt derart ausgebildet, dass der Behandlungskopf durch eine geradlinige Relativbewegung in der Richtung X an dem Träger 85 angeordnet und/oder von diesem Träger losgelöst werden kann. Daneben können (nicht gezeigte) Verriegelungselemente vorgesehen sein, welche ein Arretieren des Behandlungskopfes an dem Träger 85 ermöglichen.

Figur 4 zeigt ein Beispiel für eine kombinierte Behandlungseinrichtung. Hier sind zwei wechselbare Elemente 51 und 53 vorgesehen, die gemeinsam an dem Arm 54 angeordnet sind.

So kann beispielsweise das wechselbare Element 53 bzw. der Behandlungskopf 53 für einen Blasformwechsel dienen und das Behandlungselement 51 für einen Wechsel von Heizdornen. Dies bringt den Vorteil mit sich, dass die Behandlungsköpfe 51 und 53 an dem Roboterarm 54 nicht getauscht werden müssen.

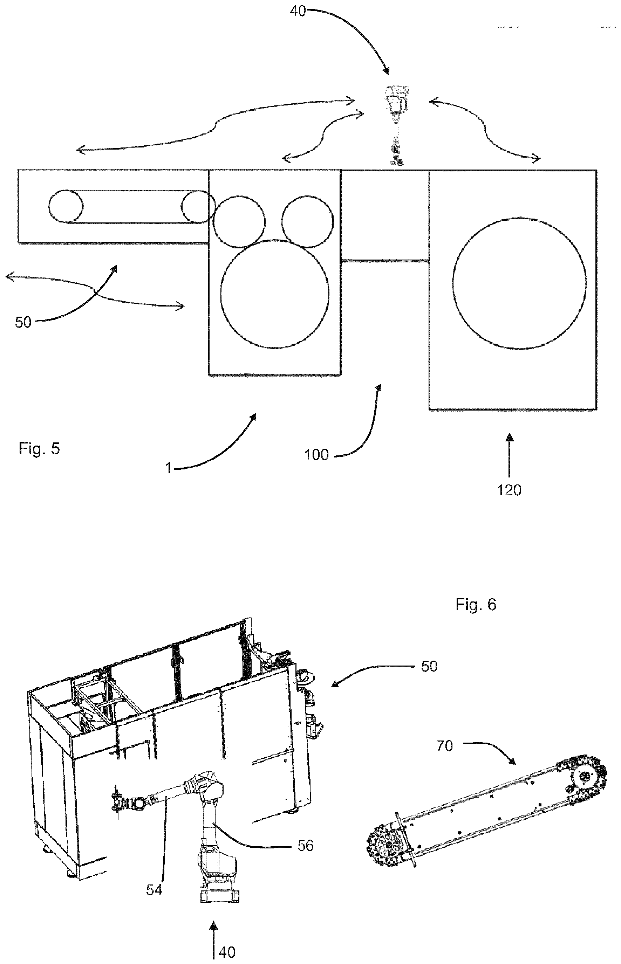

Figur 5 zeigt schematisch eine weitere Anordnung 100 zum Herstellen von Kunststoffbehältnissen. Bei dieser Ausführungsform ist die Wechseleinrichtung 40 beweglich angeordnet, beispielsweise auf einem frei verfahrbaren Fahrwagen oder auf Schienen. Auf diese Weise kann die Wechseleinrichtung 40 sowohl für die Erwärmungseinrichtung 50 eingesetzt werden als auch für die Umformungseinrichtung 1 und gegebenenfalls sogar für nachgeordnete Aggregate, wie etwa eine Fülleinrichtung 120. Auf diese Weise wäre es sogar möglich, die Wechseleinrichtung für eine vollständige Anlage zu verwenden.

Wie erwähnt ist es dabei möglich, dass die Wechseleinrichtung nicht auf einem Fahrwagen, der flexibel verfahrbar ist, vorgesehen ist, sondern auf einem festen Schienen- oder Führungssystem. Dieses Führungssystem erlaubt es, die Wechseleinrichtung an definierten Stellen über definierte Fahrwege zu verschieben. Auch auf diese Weise kann ein zentraler Bereich für die Bevorratung der Garniturenteile, d.h. ein Garniturenlager angelegt werden. Die Wechseleinrichtung holt sich in diesem Fall bevorzugt immer die für den jeweiligen Wechsel nötigen Garniturensätze auf ihren Fahrwagen und puffert diese bevorzugt zwischenzeitlich. Auf diese Weise kann auf platzraubende Garniturenmagazine an den Maschinen vor Ort verzichtet werden, wobei derartige Garniturenmagazine oftmals zum Nachteil haben, dass sie den Zugang an die Maschine behindern. Allgemein weist bevorzugt die Wechseleinrichtung ein Magazin zur Aufnahme von Elementen der Umformungseinrichtung und/oder von Elementen der Erwärmungseinrichtung auf, welches zumindest zeitweise an die Wechseleinrichtung angekoppelt ist und so gemeinsam mit dieser bewegt werden kann.

Figur 6 zeigt ein Beispiel für eine Wechseleinrichtung 40. Dabei ist wieder die Wechseleinrichtung 40 vorgesehen, beispielsweise stationär. Diese kann in den Bereich einer Erwärmungseinrichtung 50 eingreifen und dort beispielsweise Heizdorne übernehmen. Diese Teile können in einem Magazin 70 abgelegt werden. So ist es beispielsweise möglich, dass die Wechseleinrichtung 40 in einem hinteren Bereich der Erwärmungseinrichtung einen an dem Roboterarm angebrachten Behandlungskopf an einem Heizdorn und einer Abschirmplatte anbringt (um diese zu wechseln). Das Bezugszeichen 56 kennzeichnet einen weiteren Arm der Wechseleinrichtung, an dem wiederum der Arm 54 (schwenkbar bzw. allgemein bewegbar) angeordnet ist.

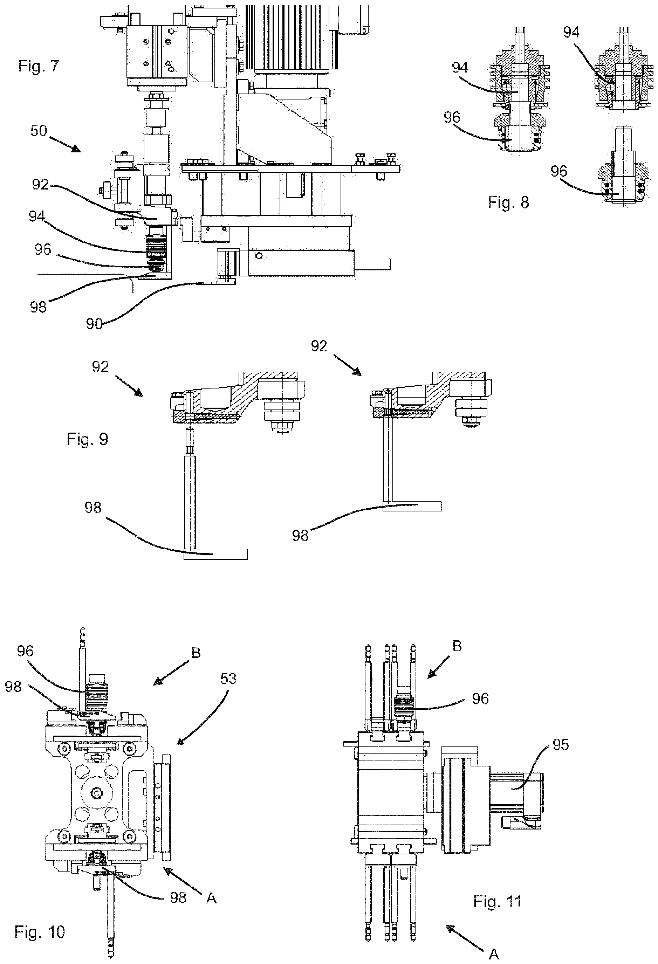

Figur 7 zeigt eine detailliertere Darstellung eines Wechselbereiches einer Erwärmungseinrichtung 50. Diese Erwärmungseinrichtung weist hierbei eine Vielzahl von Trägern 92 auf, an denen jeweils Heizdorne 96 angeordnet sind. Das Bezugszeichen 98 bezieht sich jeweils auf Abschirmelemente, wie beispielsweise Abschirmplatten, die ebenfalls von dem Träger 92 entfernbar sind. Mittels einer Entriegelungseinrichtung 90 kann das Loslösen der Abschirmplatten initiiert werden.

Figur 8 zeigt die jeweiligen Heizdorne 96, die an entsprechenden Grundkörpern 94 lösbar befestigt sind. Bei der rechten in Figur 8 gezeigten Darstellung wurde der Heizdorn 96 gerade entfernt.

Figur 9 zeigt die Loslösung eines Abschirmelementes 98, wie beispielsweise einer Abschirmplatte (ebenfalls von dem Träger 92). Dabei ist es möglich, dass eine in der Erwärmungseinrichtung fest angeordnete Vorrichtung für den Heizdorn, 96 und die Abschirmplatte 98 auch für eine Entriegelung der Garnituren sorgt. Die Öffnungsbewegungen können hier beispielsweise über pneumatische Zylinder eingeleitet werden. Anschließend können die Garniturenteile von dem Handling der Wechseleinrichtung aufgenommen und wieder eingesetzt werden.

Die Figuren 10 und 11 zeigen eine Behandlungseinrichtung 51 bzw. 53. Dabei sind diese Behandlungseinrichtungen bzw. die Behandlungsköpfe so aufgebaut, dass sie gleichzeitig wenigstens zwei Abschirmplatten 98 und auch wenigstens zwei Heizdorne 96 aufnehmen können. Bevorzugt sind diese Behandlungsköpfe spiegelsymmetrisch aufgebaut. Auf diese Weise kann die Wechseleinrichtung nach dem Entnehmen eines Garniturensatzes A um 180° geschwenkt werden, um einen Garniturensatz B einzuwechseln bzw. anzubringen. In Figur 11 ist auch eine Antriebseinrichtung 95 dargestellt, welche diese Schwenk- bzw. Drehbewegung des Behandlungskopfes 53 ermöglicht.

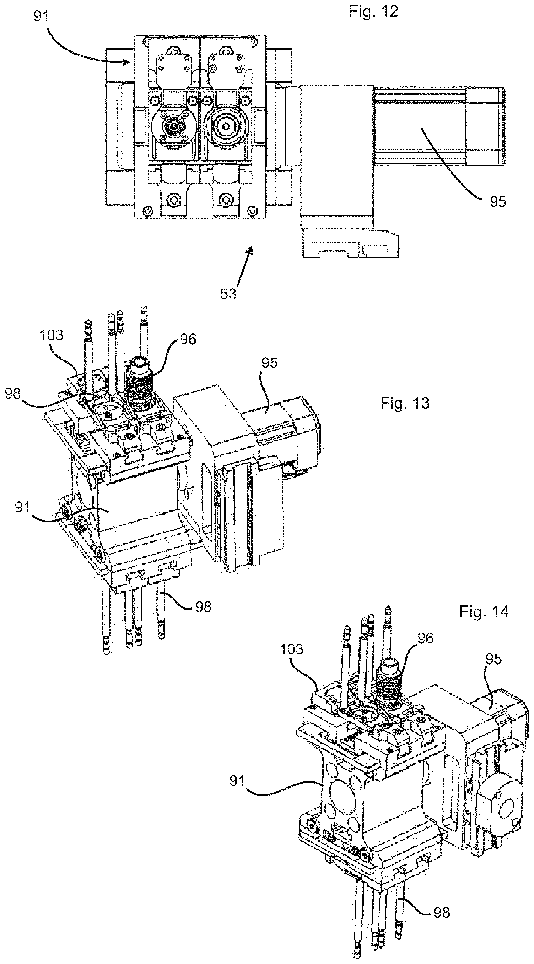

Die Figuren 12 - 14 zeigen drei Darstellungen eines derartigen Behandlungskopfes 53. Dieser Behandlungskopf weist dabei einen Grundträger 91 auf, der - wie oben erwähnt - um 180° durch einen Antrieb 95 schwenkbar ist. Auf beiden Seiten dieses Kopfes können jeweils die zu wechselnden Garnituren angeordnet werden. Dabei können Klemmmechanismen vorgesehen sein, welche zum Zwecke des Transportierens beispielsweise die Abschirmplatten 98 und die Dorne 96 vorübergehend halten. Vorteilhaft handelt es sich hierbei um aktive Halteelemente, d.h. ein Eingriff mit den zu wechselnden Bauteilen kann gelockert oder arretiert werden.

Das Bezugszeichen 103 kennzeichnet ein gegenüber dem Grundträger bewegliches Eingriffselement mittels dessen ein Halt mit den Abschirmelementen und/oder den Heizdornen 96 hergestellt werden kann. Dabei kann dieses Eingriffselement mittels pneumatischer, hydraulischer und/oder elektrischer Antriebseinrichtungen bewegt werden.

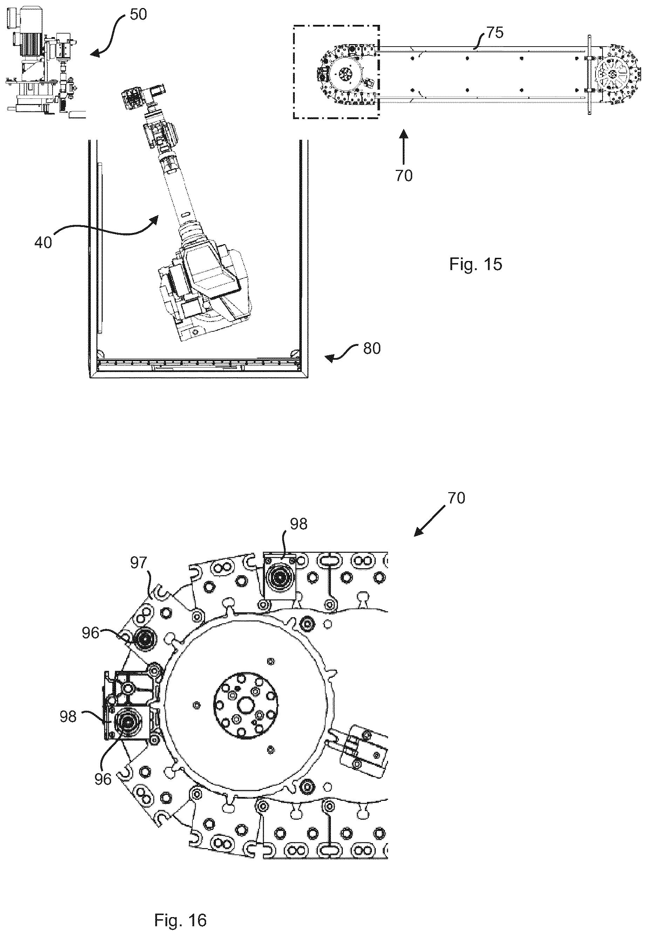

Figur 15 zeigt eine weitere Darstellung zur Veranschaulichung eines Wechsels von Garniturenteilen der Erwärmungseinrichtung 50. In diesem Falle ist die Wechseleinrichtung 40 in einem Schutzgehäuse 80 angeordnet. Daneben wird hier als Magazin ein Garniturenmagazin 70 verwendet, welches selbst eine Transporteinrichtung 75 zum Transportieren der Garniturenteile aufweist. Der Vorteil eines derartigen Garniturenmagazins gegenüber einem festen Ablagesystem ist, dass der Ablageort im Raum immer derselbe sein kann und somit unnötig lange Verfahrwege und auch Verfahrzeit vermieden werden können.

Figur 16 zeigt eine Detaildarstellung dieses Garniturenmagazins 70. Bevorzugt ist dieses Garniturenmagazin in der Lage, an jedem Magazinglied wenigstens zwei Heizdorne und auch wenigstens zwei Abschirmplatten anzuordnen. Auf diese Weise kann ein Einwechseln der Garniturteile erleichtert werden. Die Bezugszeichen 97 kennzeichnen jeweils Träger für die betreffenden Garniturteile.

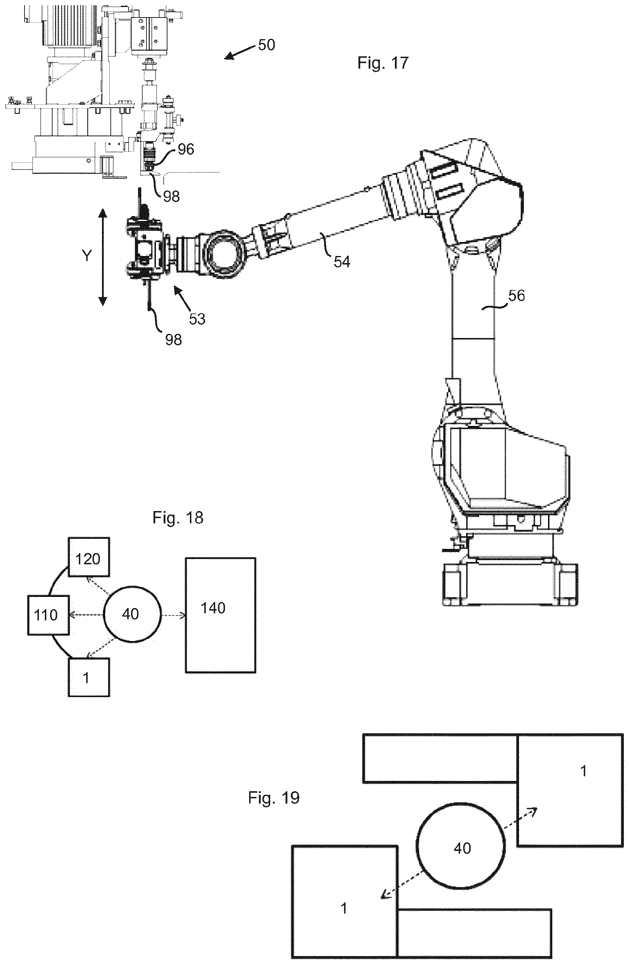

Figur 17 zeigt eine Darstellung zur Veranschaulichung eines Garniturenwechsels. Hier wird der Wechselarm 54 mithilfe der jeweiligen Gelenke im Wesentlichen senkrecht (vgl. Doppelpfeil Y) nach oben bewegt, um die Garniturenteile, hier Heizdorne 96 und Abschirmplatten 98 auszuwechseln. Dabei ist es möglich, dass zunächst die bestehenden Garniturenteile 96 und 98 entnommen werden, anschließend das Wechselelement 53 um 180° gedreht wird, um sofort die neuen Garniturenteile an der Erwärmungseinrichtung 50 anzuordnen.

Figur 18 zeigt eine grobschematische Darstellung einer erfindungsgemäßen Anlage 1. Hierbei ist wiederum eine Blasformmaschine 1 vorgesehen, daneben jedoch auch eine weitere Behandlungseinrichtung 110 hier in Form einer Etikettiermaschine. Daneben ist eine Fülleinrichtung 120 vorgesehen. Die Wechseleinrichtung 40 kann zwischen den Einrichtungen 1, 110 und 120 verfahren werden, um dort Behandlungsaufgaben wahrzunehmen.

Das Bezugszeichen 140 bezieht sich auf ein Garniturenlager, in dem beispielsweise unterschiedliche Garniturenteile wie beispielsweise Greifelemente oder Haltedornen gelagert werden können.

Bei der in Figur 19 gezeigten Situation ist die Wechseleinrichtung 40 zwischen einem ersten Vorrichtung 1 zum Umformen von Kunststoffvorformlingen zu Kunststoffbehältnissen und einer zweiten Vorrichtung 1 Umformen von Kunststoffvorformlingen zu Kunststoffbehältnissen bewegbar, um auf diese Weise alternativ an diesen beiden Vorrichtungen Wechselvorgänge oder sonstige Behandlungsvorgänge durchzuführen.

### Bezugszeichenliste

- 1: Vorrichtung zum Umformen von Kunststoffvorformlingen
- 2: Transporteinrichtung
- 8: Umformungsstation
- 10: Kunststoffvorformlinge
- 12: Stationsträger
- 14: Blasformeinrichtung
- 16: Blasformträger
- 40: Wechseleinrichtung
- 49: Transporteinrichtung der Erwärmungseinrichtung
- 50: Erwärmungseinrichtung
- 51, 53: Behandlungskopf
- 51a, 51b: Verbindungselemente
- 54, 56: Arm
- 70, 71: Magazin
- 75: Transporteinrichtung des Magazins 70
- 80: Schutzgehäuse
- 85: Träger
- 87: Antrieb, Motor
- 90: Entriegelungseinrichtung
- 92: Träger
- 94: Grundkörper
- 95: Antriebseinrichtung
- 96: Heizdorn
- 97: Träger
- 98: Abschirmelement
- 100: Anlage
- 103: Greifelement
- 110: Etikettiermaschine
- 120: Fülleinrichtung
- 140: Lagereinrichtung, Garniturenlager
- A, B: Garniturensätze
- X,Y: Richtungen

## Patentansprüche

1. Anlage (100) zum Umformen von Kunststoffvorformlingen zu Kunststoffbehältnissen, mit einer Erwärmungseinrichtung (50) zum Erwärmen der Kunststoffvorformlinge (10), wobei diese Erwärmungseinrichtung (50) eine Transporteinrichtung (49) zum Transportieren der Kunststoffvorformlinge (10) mit einer Vielzahl von Halteelementen zum Halten der Kunststoffvorformlinge (10) aufweist, mit einer Vorrichtung (1) zum Umformen der Kunststoffvorformlinge (10) zu den Kunststoffbehältnissen, welche in der Transportrichtung der Kunststoffvorformlinge (10) nach der Erwärmungseinrichtung (50) angeordnet ist, wobei die Vorrichtung (1) eine Transporteinrichtung (2) aufweist, welche die Kunststoffvorformlinge (10) entlang eines vorgegebenen Transportpfads transportiert, und wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen umformbar sind und diese Blasformeinrichtungen (14) jeweils an Blasformträgern (16) angeordnet sind,
wobei die Vorrichtung (1) eine Wechseleinrichtung (40) aufweist, welche geeignet und dazu bestimmt ist, zumindest die Blasformeinrichtungen (14) von deren Blasformträgern (16) zu entfernen und/oder Blasformeinrichtungen an den Blasformträgern (16) anzuordnen, wobei diese Wechseleinrichtung (40) wenigstens einen schwenkbaren Wechselarm (54, 56) aufweist und wobei diese Wechseleinrichtung (40) weiterhin geeignet und dazu bestimmt ist, wenigstens ein wechselbares Element (96, 98) der Erwärmungseinrichtung von der Erwärmungseinrichtung zu entfernen und/oder das wechselbare Element an dieser Erwärmungseinrichtung (40) anzuordnen, wobei es sich bei der Wechseleinrichtung (40) um eine manuelle Wechseleinrichtung (40) handelt, und weiter **dadurch gekennzeichnet, dass**
die manuelle Wechseleinrichtung (40) ein Manipulator ist, wobei der Manipulator dazu eingerichtet und dafür vorgesehen ist ein Eigengewicht der zu bewegenden Blasformeinrichtungen zu kompensieren.

2. Anlage (100) nach Anspruch 1,
**dadurch gekennzeichnet, dass**
die Wechseleinrichtung (40) auch zum Behandeln des Produkts bei einer Behältnisinspektion und/oder einer Preforminspektion dient, um auf diese Weise eine Behandlung zwischen einzelnen Prüfstationen der Anlage (100) zu erreichen.

3. Anlage (100) nach Anspruch 1 oder 2,
**dadurch gekennzeichnet, dass**
die Wechseleinrichtung (40) dazu eingerichtet und dafür vorgesehen ist mittelbar zur Unterstützung des Benutzers derart zu dienen, dass die Wechseleinrichtung (40) mit einem Bediener durch die Anlage fährt, damit es diesem ermöglicht ist manuell entsprechende Handgriffe in der Anlage vorzunehmen.

4. Anlage (100) nach zumindest einem der vorhergehenden Ansprüche, **dadurch gekennzeichnet, dass**
an einem Ende der manuellen Wechseleinrichtung (40) eine Greifeinrichtung (52) zum Greifen der zu bewegenden Blasformen befestigt ist.

5. Anlage (100) nach zumindest einem der vorhergehenden zumindest einem der vorhergehenden Ansprüche,
**dadurch gekennzeichnet, dass**
die manuelle Wechseleinrichtung dazu eingerichtet und dafür vorgesehen ist von einem Bediener geführt zu werden.

6. Anlage (100) nach zumindest einem der vorhergehenden zumindest einem der vorhergehenden Ansprüche,
**dadurch gekennzeichnet, dass**
die manuelle Wechseleinrichtung dazu eingerichtet und dafür vorgesehen ist, dass die Blasformeinrichtung als ein Formenpaket, das heißt insbesondere einschließlich sämtlicher Teile der Blasform, ausgetauscht wird.

7. Anlage (100) nach dem vorhergehenden Anspruch,
**dadurch gekennzeichnet, dass**
das Formenpaket Blasformhälften und einen Boden umfasst, wobei das Formenpaket frei von Griffen oder Ähnlichem zum Greifen der Formenpakets ist.

8. Anlage (100) nach zumindest einem der vorhergehenden Ansprüche, **dadurch gekennzeichnet, dass**
der Wechselarm (54, 56) sowohl in eine erste Wechselposition bewegbar ist, in welcher er Blasformeinrichtungen greifen kann als auch in eine zweite Wechselposition welcher er das wechselbare Element der Erwärmungseinrichtung (50) greifen kann.

9. Anlage (100) nach wenigstens einem der vorangegangenen Ansprüche, **dadurch gekennzeichnet, dass**
die Wechseleinrichtung (40) wenigstens eine Greifeinrichtung (52) zum Greifen der Blasformeinrichtungen (14) aufweist.

10. Anlage (100) nach Anspruch 10,
**dadurch gekennzeichnet, dass**
die Greifeinrichtung (52) wechselbar an dem Wechselarm angeordnet ist.

11. Anlage (100) nach wenigstens einem der vorangegangenen Ansprüche, **dadurch gekennzeichnet, dass**
die Wechseleinrichtung (40) in ihrer Gesamtheit gegenüber der Erwärmungseinrichtung (50) und der Vorrichtung (1) zum Umformen bewegbar ist.

12. Anlage (100) nach wenigstens einem der vorangegangenen Ansprüche, **dadurch gekennzeichnet, dass**
die Wechseleinrichtung (40) auf Schienen geführt ist und so zwischen vorbestimmten Bereichen der Erwärmungseinrichtung (50) und der Umformungsstation (8) bewegbar ist.

13. Verfahren zum Herstellen von Kunststoffbehältnissen, wobei Kunststoffvorformlinge (10) mittels einer Erwärmungseinrichtung (50) erwärmt werden und die Kunststoffvorformlinge während ihrer Erwärmung mittels einer Transporteinrichtung (49) transportiert werden, wobei diese Transporteinrichtung (49) eine Vielzahl von Halteelementen zum Halten der Kunststoffvorformlinge (10) aufweist und wobei die Kunststoffvorformlinge (10) nach ihrer Erwärmung mittels einer Vorrichtung (1) zum Umformen expandiert und zu den Kunststoffbehältnissen umgeformt werden, wobei diese Vorrichtung (1) eine Transporteinrichtung (2) aufweist, welche die Kunststoffvorformlinge (10) entlang eines vorgegebenen Transportpfads transportiert, und wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen umgeformt werden wobei diese Blasformeinrichtungen jeweils an Blasformträgern (16) angeordnet sind,
wobei wenigstens zeitweise eine Wechseleinrichtung (40) die Blasformeinrichtungen von deren Blasformträgern (16) entnimmt und/oder Blasformeinrichtungen an den Blasformträgern (16) anordnet und wobei diese Wechseleinrichtung (40) wenigstens zeitweise wenigstens ein wechselbares Element (96,98) der Erwärmungseinrichtung (50) von der Erwärmungseinrichtung (50) entfernt oder an dieser Erwärmungseinrichtung (40) anordnet, und
wobei es sich bei der Wechseleinrichtung (40) um eine manuelle Wechseleinrichtung (40) handelt, und weiter **dadurch gekennzeichnet, dass** die manuelle Wechseleinrichtung (40) ein Manipulator ist, wobei der Manipulator dazu eingerichtet und dafür vorgesehen ist ein Eigengewicht der zu bewegenden Blasformeinrichtungen zu kompensieren.

## Claims

1. Plant (100) for forming plastic preforms into plastic containers, having a heating device (50) for heating the plastic preforms (10), wherein this heating device (50) has a transport device (49) for transporting the plastic preforms (10) with a plurality of holding elements for holding the plastic preforms (10) with an apparatus (1) for forming the plastic preforms (10) into the plastic containers, which is arranged downstream of the heating device (50) in the transport direction of the plastic preforms (10), wherein the apparatus (1) comprises a transport device (2) which transports the plastic preforms (10) along a predetermined transport path, and wherein the transport device (2) has a movable station carrier (12) which is arranged at least indirectly on a stationary base carrier (6) and on which a plurality of forming stations (8) are arranged, wherein these forming stations (8) each have blow-molding devices (14) which each form cavities within which the plastic preforms (10) can be formed into the plastic containers, and these blow-molding devices (14) are each arranged on blow-molding carriers (16),
wherein
the apparatus (1) comprises a changing device (40) which is suitable and intended to remove at least the blow mold devices (14) from their blow mold supports (16) and/or to arrange blow mold devices on the blow mold supports (16), wherein said changing device (40) comprises at least one pivoted changeable arm (54, 56) and wherein said changing device (40) is further suitable and intended to remove at least one changeable element (96, 98) of the heating device from the heating device and/or to arrange the changeable element on said heating device (40), wherein the changing device (40) is a manual changing device (40), and further
**characterized in that**
the manual changing device (40) is a manipulator, wherein the manipulator is adapted and provided for compensating a dead weight of the blow molding devices to be moved.

2. Plant (100) according to claim 1,
**characterized in that**
the changing device (40) also serves to treat the product during a container inspection and/or a preform inspection, in order to achieve in this way a treatment between individual inspection stations of the installation (100).

3. Plant (100) according to claim 1 or 2,
**characterized in that**
the changing device (40) is designed and intended to serve indirectly to assist the user in such a way that the changing device (40) moves with an operator through the plant so as to enable the operator to carry out corresponding manual operations in the plant.

4. Plant (100) according to at least one of the preceding claims,
**characterized in that**
a gripping device (52) for gripping the blow molds to be moved is attached to one end of the manual changing device (40).

5. Plant (100) according to at least one of the preceding claims,
**characterized in that**
the manual changing device is designed and intended to be guided by an operator.

6. Plant (100) according to at least one of the preceding claims,
**characterized in that**
the manual changing device is designed and intended for the blow mold device to be changed as a mold package, i.e. in particular including all parts of the blow mold.

7. Plant (100) according to the preceding claim,
**characterized in that**
the mold package comprises blow mold halves and a bottom, wherein the mold package is free of grippers or the like for gripping the mold package.

8. Plant (100) according to at least one of the preceding claims,
**characterized in that**
the changing arm (54, 56) is movable both into a first changing position, in which it can grip blow molding devices, and into a second changing position, in which it can grip the changeable element of the heating device (50).

9. Plant (100) according to at least one of the preceding claims,
**characterized in that**
the changing device (40) has at least one gripping device (52) for gripping the blow molding devices (14).

10. Plant (100) according to claim 10,
**characterized in that**
the gripping device (52) is changeably arranged on the changing arm.

11. Plant (100) according to at least one of the preceding claims,
**characterized in that**
the changing device (40) is movable in its entirety relative to the heating device (50) and the apparatus (1) for forming.

12. Plant (100) according to at least one of the preceding claims,
**characterized in that**
the changing device (40) is guided on rails and can thus be moved between predetermined areas of the heating device (50) and the forming station (8).

13. Method for producing plastic containers, wherein plastic preforms (10) are heated by means of a heating device (50) and the plastic preforms are transported by means of a transport device (49) during their heating, wherein said transport device (49) comprises a plurality of holding elements for holding the plastic preforms (10), and wherein the plastic preforms (10), after being heated, are expanded and formed into the plastic containers by means of an apparatus (1) for forming, wherein said apparatus (1) comprises a transport device (2) which transports the plastic preforms (10) along a predetermined transport path, and wherein the transport device (2) comprises a movable station carrier (12) which is arranged at least indirectly on a stationary base carrier (6) and on which a plurality of forming stations (8) are arranged, wherein these forming stations (8) each have blow-molding devices (14) which each form cavities within which the plastic preforms (10) are formed into the plastic containers, wherein these blow molding devices are each arranged on blow molding carriers (16),
wherein
at least at times, a changing device (40) removes the blow-molding devices from their blow-molding supports (16) and/or arranges blow-molding devices on the blow-molding supports (16), and wherein this changing device (40) at least at times removes at least one changing element (96, 98) of the heating device (50) from the heating device (50) or arranges it on this heating device (40), and
wherein the changing device (40) is a manual changing device (40), and further
**characterized in that**
the manual changing device (40) is a manipulator, wherein the manipulator is designed and intended for compensating a dead weight of the blow molding devices to be moved.

## Revendications

1. Installation (100) destinée à mettre en forme des préformes en matière plastique en des récipients en matière plastique, avec un système de chauffage (50) destiné à chauffer les préformes en matière plastique (10), dans laquelle ledit système de chauffage (50) présente un système de transport (49) destiné à transporter les préformes en matière plastique (10) avec une pluralité d'éléments de maintien destinés à maintenir les préformes en matière plastique (10), avec un dispositif (1) destiné à mettre en forme les préformes en matière plastique (10) en les récipients en matière plastique, lequel est disposé après le système de chauffage (50) dans la direction de transport des préformes en matière plastique (10), dans laquelle le dispositif (1) présente un système de transport (2), lequel transporte les préformes en matière plastique (10) le long d'un trajet de transport prédéfini, et dans laquelle le système de transport (2) présente un support de poste (12) mobile et disposé au moins indirectement sur un support de base stationnaire (6), sur lequel une pluralité de postes de mise en forme (8) est disposée, dans laquelle lesdits postes de mise en forme (8) présentent respectivement des systèmes de moulage par soufflage (14), lesquels réalisent respectivement des espaces creux, à l'intérieur desquels les préformes en matière plastique (10) peuvent être mises en forme en les récipients en matière plastique et lesdits systèmes de moulage par soufflage (14) sont disposés respectivement sur des supports de moule de soufflage (16),
dans laquelle
le dispositif (1) présente un système de changement (40), lequel est adapté pour et se destine à retirer au moins les systèmes de moulage par soufflage (14) de leurs supports de moule de soufflage (16) et/ou à disposer des systèmes de moulage par soufflage sur les supports de moule de soufflage (16), dans laquelle ledit système de changement (40) présente au moins un bras de changement (54, 56) pivotant et dans laquelle ledit système de changement (40) par ailleurs est adapté pour et se destine à retirer du système de chauffage au moins un élément interchangeable (96, 98) du système de chauffage et/ou à disposer l'élément interchangeable sur ledit système de chauffage (40), dans laquelle le système de changement (40) est un système de changement (40) manuel,
**caractérisée en ce que**
le système de changement (40) manuel est un manipulateur, dans laquelle le manipulateur est mis au point et est prévu pour compenser un propre poids des systèmes de moulage par soufflage à déplacer.

2. Installation (100) selon la revendication 1,
**caractérisée en ce que**
le système de changement (40) sert également à manier le produit lors d'une inspection de récipient et/ou lors d'une inspection de préforme pour atteindre ainsi un maniement entre divers postes de contrôle de l'installation (100).

3. Installation (100) selon la revendication 1 ou 2,
**caractérisée en ce que**
le système de changement (40) est mis au point et est prévu pour servir indirectement au soutien de l'utilisateur de telle manière que le système de changement (40) se déplace à travers l'installation avec un utilisateur afin qu'il lui soit permis de réaliser manuellement des manipulations correspondantes dans l'installation.

4. Installation (100) selon au moins l'une quelconque des revendications précédentes,
**caractérisée en ce que**
un système de préhension (52) destiné à saisir les moules de soufflage à déplacer est fixé sur une extrémité du système de changement (40) manuel.

5. Installation (100) selon au moins l'une quelconque des revendications précédentes,
**caractérisée en ce que**
le système de changement manuel est mis au point et est prévu pour être guidé par un utilisateur.

6. Installation (100) selon au moins l'une quelconque des revendications précédentes,
**caractérisée en ce que**
le système de changement manuel est mis au point et est prévu pour que le système de moulage par soufflage soit échangé en tant que paquet de moules, à savoir en particulier y compris toutes les parties du moule de soufflage.

7. Installation (100) selon la revendication précédente,
**caractérisée en ce que**
le paquet de moules comprend des moitiés de moule de soufflage et un fond, dans laquelle le paquet de moules est dépourvu de poignées ou similaire pour saisir le paquet de moules.

8. Installation (100) selon au moins l'une quelconque des revendications précédentes,
**caractérisée en ce que**
le bras de changement (54, 56) peut être déplacé à la fois dans une première position de changement, dans laquelle il peut saisir des systèmes de moulage par soufflage, et dans une deuxième position de changement, dans laquelle il peut saisir l'élément interchangeable du système de chauffage (50).

9. Installation (100) selon au moins l'une quelconque des revendications précédentes,
**caractérisée en ce que**
le système de changement (40) présente au moins un système de préhension (52) destiné à saisir les systèmes de moulage par soufflage (14).

10. Installation (100) selon la revendication 10,
**caractérisée en ce que**
le système de préhension (52) est disposé de manière interchangeable sur le bras de changement.

11. Installation (100) selon au moins l'une quelconque des revendications précédentes,
**caractérisée en ce que**
le système de changement (40) peut être déplacé dans sa globalité par rapport au système de chauffage (50) et au dispositif (1) de mise en forme.

12. Installation (100) selon au moins l'une quelconque des revendications précédentes,
**caractérisée en ce que**
le système de changement (40) est guidé sur des rails et peut être déplacé de telle sorte entre des zones prédéfinies du système de chauffage (50) et du poste de mise en forme (8).

13. Procédé de fabrication de récipients en matière plastique, dans lequel des préformes en matière plastique (10) sont chauffées au moyen d'un système de chauffage (50) et les préformes en matière plastique sont transportées au moyen d'un système de transport (49) pendant leur chauffage, dans lequel ledit système de transport (49) présente une pluralité d'éléments de maintien destinés à maintenir les préformes en matière plastique (10) et dans lequel les préformes en matière plastique (10) sont expansées après leur chauffage au moyen d'un dispositif (1) de mise en forme et sont mises en forme en les récipients en matière plastique, dans lequel ledit dispositif (1) présente un système de transport (2), lequel transporte les préformes en matière plastique (10) le long d'un trajet de transport prédéfini, et dans lequel le système de transport (2) présente un support de poste (12) mobile et disposé au moins indirectement sur un support de base stationnaire (6), sur lequel une pluralité de postes de mises en forme (8) est disposée, dans lequel lesdits postes de mise en forme (8) présentent respectivement des systèmes de moulage par soufflage (14), lesquels réalisent respectivement des espaces creux, à l'intérieur desquels les préformes en matière plastique (10) sont mises en forme en les récipients en matière plastique, dans lequel lesdits systèmes de moulage par soufflage sont disposés respectivement sur des supports de moule de soufflage (16),
dans lequel
un système de changement (40) prélève au moins par intermittence les systèmes de moulage par soufflage de leurs supports de moule de soufflage (16) et/ou dispose des systèmes de moulage par soufflage sur les supports de moule de soufflage (16) et dans lequel ledit système de changement (40) retire au moins par intermittence du système de chauffage (50) au moins un élément interchangeable (96, 98) du système de chauffage (50) ou le dispose sur ledit système de chauffage (40), et dans lequel le système de changement (40) est un système de changement manuel (40),
**caractérisé en ce que**
le système de changement (40) manuel est un manipulateur, dans lequel le manipulateur est mis au point et est prévu pour compenser un propre poids des systèmes de moulage par soufflage à déplacer.
